(19) Europäisches Patentamt
European Patent Office
Office européen des brevets

(11) EP 4 752 674 A1

(12) **EUROPÄISCHE PATENTANMELDUNG**

(43) Veröffentlichungstag:
03.06.2026 Patentblatt 2026/23

(21) Anmeldenummer: 25178282.7

(22) Anmeldetag: 22.05.2025

(51) Internationale Patentklassifikation (IPC):
G05G 5/03 (2008.04)    B62D 5/00 (2006.01)
F16F 9/53 (2006.01)    F16D 57/00 (2006.01)

(52) Gemeinsame Patentklassifikation (CPC):
G05G 5/03; F16D 57/002; B62D 5/005; F16F 9/535

(84) Benannte Vertragsstaaten:
AL AT BE BG CH CY CZ DE DK EE ES FI FR GB
GR HR HU IE IS IT LI LT LU LV MC ME MK MT NL
NO PL PT RO RS SE SI SK SM TR
Benannte Erstreckungsstaaten:
BA
Benannte Validierungsstaaten:
GE KH LA MA MD TN

(30) Priorität: 27.11.2024 DE 102024135018

(71) Anmelder: Schaeffler Technologies AG & Co. KG
91074 Herzogenaurach (DE)

(72) Erfinder:
• Graf, Artur
77880 Sasbach (DE)
• Vernay, Thibaut
67480 Roeschwoog (FR)
• Panther, Urban
77960 Seelbach (DE)
• Vornehm, Martin
77815 Bühl (DE)

(74) Vertreter: Schaeffler Technologies
Industriestraße 1-3
91074 Herzogenaurach (DE)

(54) **MAGNETORHEOLOGISCHE BREMSE**

(57) Die Erfindung betrifft eine magnetorheologische Bremse (1), aufweisend

einen Rotor (3), der um eine Achse (18) drehbar vorgesehen ist,

einen Stator (2), der gegenüber dem Rotor (3) feststehend vorgesehen ist,

wobei zwischen dem Rotor (3) und dem Stator (2) mindestens ein erster Spalt (40) vorgesehen ist, der durch den Rotor (3) und den Stator (2) in Axialrichtung bezogen auf die Achse (18) begrenzt ist und in dem ein magnetorheologisches Pulver vorgesehen ist,

wobei die Bremse (1) einen ersten Magnetfelderzeuger (50) aufweist, der dazu ausgebildet ist, zumindest den ersten Spalt (40) mit einem Magnetfeld zu durchsetzen, um eine erste Bremswirkung ($BW_1$) auf den Rotor (3) zu erzeugen, wobei die Bremse (1) weiter

einen zweiten Magnetfelderzeuger (51) aufweist,

wobei der zweite Magnetfelderzeuger (51) dazu ausgebildet ist, eine zweite Bremswirkung ($BW_2$) auf den Rotor (3) zu erzeugen, wobei die Bremse (1) weiter

eine Dämpfungseinrichtung (20) mit einer gleitenden Flächenpaarung aufweist, wobei die Dämpfungseinrichtung (20) ein Dämpfungselement (20.1) aufweist, das eine Fläche der gleitenden Flächenpaarung bildet und die Dämpfungseinrichtung (20) dazu ausgebildet ist, eine auf den Rotor (3) wirkende schwingende Gesamtbremswirkung vor Übertragung auf eine mechanische Schnittstelle der Bremse (1), mit der der Rotor (3) verbunden ist, zu dämpfen,

wobei die Bremse (1) dazu ausgebildet ist, die gleitende Flächenpaarung mit einer Axialkraft zu beaufschlagen, die durch den ersten Magnetfelderzeuger (50) erzeugt

wird.

Ferner betrifft die Erfindung ein Verfahren, einen Force-Feedback-Aktuator (100) und eine Lenkeinrichtung (200) für ein Fahrzeug.

Fig. 2

**Beschreibung**

Die vorliegende Erfindung betrifft eine magnetorheologische Bremse, ein Verfahren, einen Force-Feedback-Aktuator sowie eine Lenkeinrichtung.

Heutzutage sind magnetorheologische Bremsen bekannt. Diese weisen einen Rotor auf, der um eine Achse drehbar vorgesehen ist und dazu ausgebildet ist, eine Bremswirkung aufzunehmen und diese Bremswirkung auf eine mechanische Schnittstelle, wie eine Welle, die drehbar vorgesehen ist, zu übertragen. Die Bremswirkung auf den Rotor wird dabei durch Reibung eines magnetorheologischen Pulvers (nachfolgend auch Pulver) hervorgerufen, das sich in einem Spalt zwischen Rotor und einem Stator befindet. Dieses Pulver ist dazu ausgebildet, bei Anlegen eines entsprechenden Magnetfeldes seine Scher- oder Reibeigenschaften in Drehrichtung des Rotors zu verändern, wodurch die Bremswirkung auf den Rotor einsetzt. Die Scher- oder Reibeigenschaften werden dabei im Wesentlichen durch Ketten aus Pulverpartikeln bestimmt, die in Reaktion auf das Magnetfeld, gebildet werden, indem die Pulverpartikel aneinander und an Rotor und Stator anhaften. Bei einer Relativbewegung zwischen Rotor und Stator scheren diese Ketten gegeneinander ab, wodurch sich eine Reibstelle innerhalb des Pulvers im Spalt bildet, so dass eine Bremswirkung anhand aneinander reibender Pulverpartikel entsteht.

Typischerweise wird der Spalt in radialer Richtung innenradial durch den Rotor und außenradial durch den Stator begrenzt. Dadurch erstreckt sich der Spalt in axialer Richtung in Bezug auf die Drehachse. Um eine größere Wirkfläche bzw. Reibstelle bzw. einen größeren Spalt zu realisieren, um das erzeugbare Bremsmoment der Bremse zu erhöhen, besteht die Möglichkeit, die Erstreckung des Spalts axial zu erhöhen, was den Nachteil mit sich bringt, dass dadurch die axiale Erstreckung der Bremse erhöht wird. Dies ist insbesondere bei Force-Feedback-Aktuatoren für eine Lenkeinrichtung nachteilig, da hier bspw. neben einer solchen Bremse auch eine E-Maschine und/oder Sensorik auf einer Welle angeordnet ist, so dass axialer Bauraum beschränkt ist. Aber auch bei anderen Anwendungen, die Mensch-Maschine-Schnittstellen betreffen, wie Joysticks oder Drehknöpfe, ist eine axial bauraumsparende Lösung wünschenswert.

Bei magnetorheologischen Bremsen können ferner Reibschwingungen, Vibrationen und Geräuschemissionen auftreten. Diese Bremsen können daher ein schlechtes Noise-Vibration-Harshness-Verhalten (NVH-Verhalten) aufweisen. Bei haptischer Anwendung (Mensch-Maschine-Schnittstellen wie die oben erwähnte einer Lenkeinrichtung, Joysticks oder Drehknöpfen) ist dies komfortmindernd oder irritierend. Der Grund für ein schlechtes NVH-Verhalten kann darin liegen, dass sich Reibschwingungen aufgrund eines Stick-Slip-Effekts in dem Pulver einstellen.

Ausgehend davon besteht ein Bedarf, eine solche magnetorheologische Bremse zu verbessern.

Vor diesem Hintergrund ist es eine Aufgabe der vorliegenden Erfindung eine magnetorheologische Bremse bereitzustellen, die zumindest eins der oben beschriebenen Probleme löst.

Offenbarung der Erfindung

Diese und andere Aufgaben, die beim Lesen der folgenden Beschreibung noch genannt werden oder vom Fachmann erkannt werden können, werden durch den Gegenstand der unabhängigen Ansprüche gelöst. Vorteilhafte Ausführungsformen und Weiterbildungen sind den Unteransprüchen und der nachfolgenden Beschreibung sowie den Zeichnungen zu entnehmen.

Die erfindungsgemäße magnetorheologische Bremse weist einen Rotor auf, der um eine Achse drehbar vorgesehen ist. Die Bremse weist weiter einen Stator auf, der gegenüber dem Rotor feststehend vorgesehen ist. Zwischen dem Rotor und im Stator ist mindestens ein erster Spalt vorgesehen, der durch den Rotor und den Stator in axialer Richtung bezogen auf die Achse begrenzt ist und in dem ein magnetorheologisches Pulver vorgesehen ist. Die Bremse weist einen ersten Magnetfelderzeuger auf, der dazu ausgebildet ist, zumindest den ersten Spalt mit einem ersten Magnetfeld zu durchsetzen, um eine erste Bremswirkung auf den Rotor zu erzeugen.

Die erste Bremswirkung stellt sich dabei durch Veränderung der Scher- und/oder Reibeigenschaften des Pulvers in dem ersten Spalt ein, wobei die Veränderung der Scher- und/oder Reibeigenschaften des Pulvers, wie oben beschrieben, aus der Verkettung der Pulverpartikel untereinander herrühren und sich eine Reibstelle innerhalb des Pulvers im ersten Spalt ausbildet, an der eine Reibkraft entsteht, die als Bremswirkung auf den Rotor wirkt.

Die Bremse weist mit dem ersten Spalt einen Spalt auf, der durch gegenüberliegende Flächen von Rotor und Stator in Axialrichtung begrenzt ist. Mit anderen Worten erstreckt sich der erste Spalt zumindest teilweise oder vollständig in radialer Richtung bezogen auf die Achse. Auf diese Weise kann, eine Bauweise der Bremse realisiert werden, bei der eine möglichst geringe Erstreckung des zur Erzeugung der Bremswirkung vorhandenen Spalts in axialer Richtung vorliegt, verglichen mit einer Bremse, die einen ausschließlich in Axialrichtung erstreckten Spalt aufweist.

Die radiale Erstreckung des Spalts, genauer, die radiale Erstreckung der gegenüberliegenden Flächen von Rotor und Stator, die den ersten Spalt in Axialrichtung begrenzen, kann entsprechend gewählt werden, um eine gewünschte Bremswirkung, bzw. eine gewünschte Reibstelle und/oder deren Position innerhalb des Spalts, d. h. innerhalb des magnetorheologischen Pulvers, zu realisieren. D.h., es kann eine radiale Position, an der sich die Reibstelle in dem ersten Spalt ausbildet, bzw. an der sich die effektiv wirkende Reibstelle in dem ersten Spalt ausbildet durch die radiale Erstreckung des Spalts erreicht beeinflusst werden.

Zur Erzeugung der ersten Bremswirkung kann der erste Magnetfelderzeuger steuerbar ausgebildet sein, sodass er zumindest als erstes Magnetfeld ein Magnetfeld mit vorbestimmter Feldstärke und/oder vorbestimmtem magnetischen Fluss erzeugen kann, wenn er entsprechend angesteuert wird. Insbesondere kann vorgesehen sein, dass der Magnetfelderzeuger die Feldstärke und/oder den magnetischen Fluss dieses Magnetfeldes auch zwischen einer Stärke von Null und der vorbestimmten Maximalstärke einstellen kann. Auf diese Weise ist die erzeugte erste Bremswirkung auch steuer- oder regelbar.

Der erste Magnetfelderzeuger kann zu diesem Zweck als Spule ausgebildet sein, deren Magnetfeld von dem elektrischen Strom abhängt, der durch die Windungen der Spule fließt. So kann über die Einstellung der elektrischen Stromstärke die Feldstärke und/oder der magnetische Fluss des ersten Magnetfeldes zwischen Null und einer vorbestimmten maximalen Feldstärke und/oder einem vorbestimmten maximalen magnetischen Fluss und damit auch die erste Bremswirkung eingestellt werden.

Zur Anbindung von Elementen, wie haptischen Bedienelementen oder drehbaren Wellen, weist die Bremse eine mechanische Schnittstelle auf, mit der der Rotor verbunden ist. Die mechanische Schnittstelle kann insbesondere eine drehbare Welle sein, auf der der Rotor drehfest vorgesehen ist. Insbesondere kann die mechanische Schnittstelle einen Koppel- oder Befestigungsabschnitt umfassen, über den andere drehbare Elemente mit der mechanischen Schnittstelle verbunden werden können.

Gemäß einer Ausführungsform weist die Bremse einen zweiten Magnetfelderzeuger auf. Der zweite Magnetfelderzeuger ist dazu ausgebildet, eine zweite Bremswirkung auf den Rotor zu erzeugen. Dies kann insbesondere durch die Erzeugung eines zweiten Magnetfeldes erfolgen, das in Wechselwirkung mit einem magnetorheologischen Pulver der Bremse, beispielsweise dem Pulver, das sich in dem ersten Spalt befindet, und/oder einem magnetorheologischen Pulver, das sich in einem anderen Spalt der Bremse befindet, steht. Dabei bildet sich durch das zweite Magnetfeld in dem entsprechenden Pulver eine Reibstelle aus, wodurch eine Reibkraft und somit die zweite Bremswirkung auf den Rotor erzeugt wird. Der andere Spalt der Bremse kann bspw. der weiter unten beschriebene zweite Spalt sein.

Durch den zweiten Magnetfelderzeuger ergeben sich unterschiedliche Betriebsarten und an Steuermöglichkeiten für die Bremse, was einen flexiblen Betrieb der Bremse erlaubt. Auf diese wird weiter unten genauer eingegangen. Die Betriebsarten können insbesondere durch eine Steuereinheit der Bremse umgesetzt werden.

Der zweite Magnetfelderzeuger kann gleich wie der erste Magnetfelderzeuger ausgebildet sein. D. h., dass dieser ein zweites Magnetfeld vergleichbarer Feldstärke und/oder magnetischen Flusses wie der erste Magnetfelderzeuger generieren kann. Insbesondere kann vorgesehen sein, dass der zweite Magnetfelderzeuger die Stärke des von ihm erzeugten Magnetfeldes zwischen einer Stärke von Null und einer vorbestimmten Maximalstärke einstellen kann. Auf diese Weise ist die erzeugte zweite Bremswirkung auch steuer- oder regelbar. Die vorbestimmte maximale erzeugbare Feldstärke und/oder der maximal erzeugbare magnetische Fluss des zweiten Magnetfeldes kann gleichhoch oder unterschiedlich zu der maximale erzeugbare Feldstärke und/oder dem maximal erzeugbaren magnetischen Fluss des ersten Magnetfeldes sein.

Der zweite Magnetfelderzeuger kann zu diesem Zweck als Spule ausgebildet sein, deren Magnetfeldstärke und/oder magnetischer Fluss von dem elektrischen Strom abhängt, der durch die Windungen der Spule fließt. So kann über die Einstellung der elektrischen Stromstärke die Magnetfeldstärke und/oder der magnetische Fluss des zweiten Magnetfeldes zwischen Null und der vorbestimmten Maximalstärke eingestellt werden.

Gemäß einer Ausführungsform ist die Bremse dazu ausgebildet, den zweiten Magnetfelderzeuger so anzusteuern, dass die zweite Bremswirkung zur Ergänzung oder Ersetzung der ersten Bremswirkung dient, um eine Sollbremswirkung zu realisieren. Bei einer Ergänzung der ersten Bremswirkung kann der zweite Magnetfelderzeuger so angesteuert werden, dass er eine Bremswirkung erzeugt, die in Summe mit der ersten Bremswirkung eine Gesamtbremswirkung auf den Rotor ergibt, die der Sollbremswirkung entspricht. Dabei kann beispielsweise der erste Magnetfelderzeuger oder der zweite Magnetfelderzeuger so betrieben werden, dass das erste Magnetfeld, das der erste Magnetfelderzeuger erzeugt, oder das zweite Magnetfeld, das der zweite Magnetfelderzeuger erzeugt, auf eine vorbestimmte Feldstärke oder einen vorbestimmten magnetischen Fluss, insbesondere eine vorbestimmte Maximalfeldstärke oder einen vorbestimmten magnetischen Maximalfluss, eingestellt werden, während der jeweils andere Magnetfelderzeuger ein entsprechend ergänzendes Magnetfeld erzeugt, sodass die Gesamtbremswirkung die Sollbremswirkung erreicht. Da beide Bremswirkungen, also die erste Bremswirkung hervorgerufen durch den ersten Magnetfelderzeuger und die zweite Bremswirkung hervorgerufen durch den zweiten Magnetfelderzeuger auf den Rotor der Bremse wirken, ist somit eine Kombination bzw. Ergänzung der beiden Bremswirkungen möglich. Auf diese Weise kann eine Sollbremswirkungen eingestellt werden, die die maximal möglichen Bremswirkungen des ersten bzw. zweiten Magnetfelderzeugers im Einzelbetrieb übersteigt. Die Ansteuerung des ersten und/oder zweiten Magnetfelderzeugers kann geregelt erfolgen, um eine Gesamtbremswirkung sicherzustellen. Bspw. kann als Regelgröße der jeweilige Spulenstrom verwendet werden.

Der zweite Magnetfelderzeuger kann alternativ oder zusätzlich die Redundanz der Bremse verbessern, indem er dazu ausgebildet sein kann, bei einem Ausfall des ersten Magnetfelderzeugers, alleinig eine Bremswirkung oder zumindest ohne den ersten Magnetfelderzeuger zu erzeugen.

Alternativ oder zusätzlich ist die Bremse dazu ausgebildet den zweiten Magnetfelderzeuger unabhängig von der Ansteuerung des ersten Magnetfelderzeugers anzusteuern. Der zweite Magnetfelderzeuger kann in diesem Fall bspw. dazu verwendet werden, eine vordefinierte zweite Bremswirkung zu erzielen. Dies kann beispielsweise mittels einer Vorsteuerung erfolgen, die bei einem entsprechenden Steuerbefehl an die Bremse die vorbestimmte zweite Bremswirkung einstellt. Der erste Magnetfelderzeuger kann dann beispielsweise geregelt angesteuert werden, um die Sollbremswirkung durch Kombination der ersten Bremswirkung sowie der zweiten Bremswirkung zu realisieren.

Gemäß einer Ausführungsform weist die Bremse eine Dämpfungseinrichtung auf. Die Dämpfungseinrichtung weist eine gleitende Flächenpaarung auf, wobei die Dämpfungseinrichtung ein Dämpfungselement aufweist, das eine Fläche der gleitenden Flächenpaarung bildet. Die Dämpfungseinrichtung ist dazu ausgebildet, eine auf den Rotor wirkende schwingende Gesamtbremswirkung, bspw. wie oben beschrieben, zu dämpfen, bevor die Bremswirkung auf die mechanische Schnittstelle der Bremse übertragen wird, mit der der Rotor verbunden ist. Die mechanische Schnittstelle kann eine Welle der Bremse sein. Die Dämpfung durch die Dämpfungseinrichtung erlaubt eine Reduktion oder Eliminierung von Schwingungen, bspw. Reibschwindungen, die auf die mechanische Schnittstelle wirken können. Die Schwingungen können insbesondere bei der Erzeugung der Bremswirkung in Folge auftretender Stick-Slip-Effekte entstehen. Die mechanische Schnittstelle kann insbesondere mit einem Eingabeelement, wie einen Drehknopf, einem Lenkelement oder einem Joystick direkt oder über Zwischenelemente verbunden sein. Durch die Dämpfungseinrichtung können so haptisch unerwünschte Schwingungen gedämpft oder eliminiert werden.

Zur Realisierung der Dämpfungswirkung kann vorgesehen sein, dass die Flächenpaarung eine Gegenfläche aufweist, die mit der Fläche des Dämpfungselements in Kontakt steht. Die Fläche des Dämpfungselements und die Gegenfläche können dazu ausgebildet sein, dass sie bei Drehung des Rotors um die Achse aneinander abgleiten. Auf diese Weise kann die Dämpfungseinrichtung mit einer möglichst geringen Zahl bewegter Teile ausgeführt werden.

Das Dämpfungselement kann bei Drehung des Rotors durch den Kontakt mit der Gegenfläche in der Flächenpaarung verformt werden, wobei die Dämpfungswirkung durch die Materialdämpfung des Dämpfungselements hervorgerufen werden kann. D.h., dass Energie der zu dämpfenden Schwingung des Rotors durch (schwingende) Verformung des Dämpfungselements oder durch Verformung des Materials des Dämpfungselements in Wärme umgewandelt wird. Die Verformung kann dabei eine elastische Verformung sein. Durch den Einsatz einer separaten Dämpfungseinrichtung kann die Dämpfungswirkung möglichst ideal auf den Rotor und die Bremse im Allgemeinen abgestimmt werden.

Die Dämpfungseinrichtung kann eine Bremswirkung auf die mechanische Schnittstelle der Bremse und/oder auf den sich drehenden Rotor haben, wobei die Bremswirkung durch Auslegung der Dämpfungseinrichtung so einsetzt, dass eine Schwingung, insbesondere eine reibungsinduzierte Schwingung reduziert bzw. gedämpft oder sogar eliminiert wird. Dafür ist insbesondere das Dämpfungselement bzw. das Material des Dämpfungselements und/oder dessen Gestaltung maßgeblich. Ein weiterer Ansatzpunkt zur Einstellung der Dämpfungswirkung ist die Gestaltung der Gegenfläche bzw. das Material und/oder die Oberflächenbeschaffenheit der Gegenfläche, die bspw. glatt oder mit einer erhabenen Struktur versehen sein kann. Somit unterscheidet sich eine auftretende Bremswirkung durch die Dämpfungseinrichtung von einer herkömmlichen Bremswirkung durch die Einstellung der Reibstelle in dem ersten Spalt oder weiteren Spalten der Bremse, wie oben und weiter unten beschrieben, da diese nicht darauf ausgelegt ist, Schwingungen zu reduzieren bzw. zu dämpfen oder gar zu eliminieren.

Alternativ oder zusätzlich wird die Dämpfungswirkung durch eine Gleitbewegung hervorgerufen, indem das Dämpfungselement an der Gegenfläche abgeleitet, wobei die hier entstehende Reibung dämpfend auf Schwingungen des Rotors wirkt. Die Reibwirkung kann ähnlich einer viskosen Flüssigkeitsdämpfung mit steigender Geschwindigkeit in der gleitenden Flächenpaarung gegenüber der Materialdämpfung zunehmen bzw. sogar den Hauptanteil der Dämpfungswirkung stellen.

Alternativ oder zusätzlich kann das Dämpfungselement Polyethylen, ein Polymer, insbesondere Polymerschaum, Gummi, Hartgummi, PVC und/oder ein natürliches Material wie Kork aufweisen oder daraus bestehen. Mit diesen Materialien kann eine Materialdämpfung in der gleitenden Flächenpaarung realisiert werden.

Allgemein ist zur Realisierung der Materialdämpfung vorteilhaft, wenn das Dämpfungselement ein Material mit einem hohen Verlustfaktor aufweist, d.h., dass das entsprechende Material möglichst viel aufgenommene Schwingungsenergie, insbesondere durch Verformung, absorbiert. Der Verlustfaktor entspricht dabei der Energieabnahme pro Schwingung, wenn eine freie Schwingung in das entsprechende Dämpfungselement eingekoppelt wird. Dabei hat sich ein Verlustfaktor von 0,1 - 1 als vorteilhaft für haptische Anwendungen herausgestellt.

Alternativ oder zusätzlich kann das Dämpfungselement Material mit hoher Nachgiebigkeit aufweisen, wobei durch einen hohen Verformungsgrad vergleichsweise viel Schwingungsenergie absorbiert (aber bei geringem Verlustfaktor auch wieder freigesetzt) werden kann. Das Material kann dazu einen E-Modul zwischen 150 und 1500 N/mm$^2$ aufweisen, um eine entsprechende Dämpfungswirkung zu erzielen.

Das Material des Dämpfungselements darf insbesondere nicht zu weich gewählt werden, da das Dämpfungselement sonst Gefahr läuft bei den im Betrieb auftretenden Verformungsvorgängen zerstört zu werden.

Die Flächen der gleitenden Flächenpaarung können gemäß einer Ausführungsform senkrecht zur Achse orientiert sein, um die der Rotor drehbar vorgesehen ist. D.h., dass die Flächen in axialer Richtung in Bezug auf die Achse, um die der Rotor drehbar vorgesehen ist, miteinander in Kontakt stehen. Insbesondere bei scheiben- oder ringförmiger Ausbildung des Dämpfungselements und/oder der Gegenfläche kann so eine möglichst große gleitende Flächenpaarung bei gleichzeitig möglichst geringer axialer Erstreckung der Dämpfungseinheit realisiert werden.

Die Dämpfungseinrichtung kann direkt auf den Rotor wirkend vorgesehen sein, indem das Dämpfungselement mit einer Fläche des Rotors gleitend in Kontakt ist, oder indem das Dämpfungselement drehfest auf dem Rotor vorgesehen ist, wobei das Dämpfungselement mit einer feststehenden Gegenfläche zur Bildung der Flächenpaarung in Kontakt steht. Alternativ kann die Dämpfungseinrichtung auf die mechanische Schnittstelle wirken, indem das Dämpfungselement mit der mechanischen Schnittstelle in Kontakt ist und die gleitende Flächenpaarung ausbildet oder indem das Dämpfungselement drehfest auf der mechanischen Schnittstelle vorgesehen ist und mit einer feststehenden Gegenfläche zur Bildung der Flächenpaarung in Kontakt steht. Die beiden letztgenannten Ausführungsformen sind zwar weniger direkt, da der Rotor nicht mit dem Dämpfungselement in Kontakt steht oder das Dämpfungselement drehfest mit dem Rotor verbunden ist. Sie können aber alternative Lösungen darstellen, sollte hinsichtlich Bauraum eine direktere Anbindung nicht möglich sein.

Gemäß einer Ausführungsform ist das Dämpfungselement gegenüber dem Rotor feststehend angeordnet und steht mit einer Fläche des Rotors in Kontakt, wodurch die gleitende Flächenpaarung gebildet ist. Die entsprechende Fläche des Rotors bildet dabei die Gegenfläche der gleitenden Flächenpaarung. Bspw. kann das Dämpfungselement mit einer Oberfläche eines scheibenförmigen Abschnitts des Rotors in Kontakt stehen. Durch diese Ausbildung kann ein Rotor verwendet werden, dessen axiale Ausdehnung einem Rotor gemäß dem Stand der Technik entsprechen kann. Es muss lediglich eine entsprechende Gegenfläche vorgesehen sein, die bspw. durch entsprechende Oberflächenbehandlung des Rotors, wie durch Schleifen und/oder Polieren oder durch Aufrauen und/oder Profilieren, geschaffen werden kann. Insbesondere wird dadurch keine wesentliche Erhöhung des rotatorischen Massenträgheitsmoments des Rotors erreicht.

Gemäß einer Ausführungsform ist das Dämpfungselement mit dem Rotor gekoppelt und steht mit einer feststehenden Fläche der Bremse in Kontakt, wodurch die gleitende Flächenpaarung gebildet ist. Die feststehende Fläche bildet dabei die Gegenfläche der gleitenden Flächenpaarung. Die Gegenfläche kann dabei an einer Innenfläche eines Gehäuses der Bremse ausgebildet sein. Das Dämpfungselement kann dabei direkt auf dem Rotor vorgesehen sein. Diese Ausführungsform erlaubt insbesondere eine einfache Montage der Bremse, denn der Rotor und das Dichtelement können vormontiert werden und anschließend in die Bremse eingesetzt werden, bzw. mit der mechanischen Schnittstelle verbunden werden.

Gemäß einer Ausführungsform ist die gleitende Flächenpaarung mit einer elastischen Vorspannung beaufschlagt. Diese kann durch ein Vorspannungselement erzeugt werden. Durch die elastische Vorspannung wird erreicht, dass die Flächen des Dämpfungselements und die Gegenfläche der gleitenden Flächenpaarung stets miteinander in Kontakt sind, so dass die Dämpfungswirkung stets bei jedem Betriebszustand der Bremse einsetzt. Durch die entsprechende Auslegung des Vorspannungselements kann die Vorspannung initial eingestellt werden. Das Vorspannungselement kann bspw. als Federelement, wie eine Tellerfeder, ausgebildet sein. Die Einstellung der Vorspannung kann insbesondere über die Federhärte des Vorspannungselements und/oder über einen entsprechenden Einbauraum des Federelements vorgenommen werden. Das Vorspannungselement kann mit dem Dämpfungselement identisch sein. Ist das Dämpfungselement aus einem elastischen Material, so kann durch Übermaß eine Vorspannung und dadurch ein Anpressen des Dämpfungselements auf die Gegenfläche erreicht werden. Ist das Dämpfungselement nicht elastisch oder nicht ausreichend elastisch, kann das Vorspannungselement separat ausgebildet sein, um das Dämpfungselement bzw. die gleitende Flächenpaarung entsprechend vorzuspannen. Es kann aber auch dann zur Vorspannung vorgesehen sein, wenn das Dämpfungselement allein ausreichend elastisch wäre, um die Vorspannkraft aufzubringen. In diesem Fall kann das Vorspannungselement unterstützend wirken. Die Vorspannkraft kann dabei 100-200 N betragen, um eine ausreichende Vorspannung zu gewährleisten und gleichzeitig ein durch die Vorspannung erzeugtes Haftmoment nicht zu groß werden zu lassen, so dass keine, einen Anwender irritierenden Haftreibungseffekte in der Dämpfungseinrichtung bei einsetzender Bewegung der mechanischen Schnittstelle oder bei Richtungsumkehr auftreten.

Gemäß einer Ausführungsform weist das Dämpfungselement eine Profilierung auf. Die Profilierung kann so ausgebildet sein, dass sie die Nachgiebigkeit des Dämpfungselements in der Bewegungsrichtung, in der sich das Dämpfungselement gegen die Gegenfläche bewegt erhöht. D.h., dass das Dämpfungselements in dieser Bewegungsrichtung weicher wird. Dies kann bspw. durch eine Segmentierung des Dämpfungselement realisiert werden, indem die Oberfläche des Dämpfungselements, die mit der Gegenfläche in Kontakt steht, in Segmente unterteilt wird. Dabei sind zwischen den Segmenten Aussparungen vorgesehen, so dass sich die Segmente beim Abgleiten an der Gegenfläche in Folge der Reibung an der Gegenfläche verschieben können. Insbesondere kann das Dämpfungselement hierfür als Ring ausgebildet sein, wobei der Ring mit der Seite, mit der er mit der Gegenfläche in Kontakt steht, quer zur Abgleitbewegung zwischen Dämpfungselement und Gegenfläche geschlitzt ist, um die Segmentierung der Oberfläche auszubilden. Ist das Dämpfungselement ein Ring, der axial mit der Gegenfläche in Kontakt steht, kann der Ring zur Bildung der Segmentierung mit radial verlaufenden Schlitzen versehen sein, die die einzelnen Segmente voneinander trennen. Durch eine solche Segmentierung eines Rings wird die Torsionssteifigkeit des Dämpfungselements reduziert. Dadurch kann eine größere Scherung im Material des Dämpfungselementes auftreten und somit kann mehr Schwingungsenergie im Material absorbiert werden.

Gemäß einer Ausführungsform ist die gleitende Flächenpaarung außerhalb eines Innenraums, in dem das magnetorheologische Pulver vorgesehen ist, angeordnet. Auf diese Weise wird verhindert, dass Pulver in die gleitende Flächenpaarung gelangt und dadurch das Dämpfungsverhalten der Dämpfungseinrichtung negativ beeinflusst wird. Die Pulverpartikel könnten hier nämlich als kleine Wälzkörper oder Abrasionskörper fungieren, die die Reibung oder Verschleiß in der Flächenpaarung in erheblichem Maße verändern. Dadurch wurde jedoch gleichzeitig die Dämpfungswirkung der Dämpfungseinrichtung verringert, was durch eine Anordnung der Dämpfungseinrichtung außerhalb des Innenraums vermieden wird.

Der Innenraum, in dem das magnetorheologische Pulver aufgenommen ist, kann in einem Gehäuse der Bremse ausgebildet sein, wobei sich der Rotor in den Innenraum erstreckt. Der Innenraum kann daher in Bezug auf die Achse, um die der Rotor drehbar vorgesehen ist, radial außen platziert sein, während die gleitende Flächenpaarung radial innen, d.h. radial näher an der Achse, um die der Rotor drehbar vorgesehen ist, angeordnet ist.

Zur Vermeidung von Leckagen von Pulver aus dem Innenraum ist der Innenraum mittels Dichtelementen abgedichtet, die den Innenraum radial in Bezug auf die Achse, um die der Rotor drehbar vorgesehen ist, begrenzen. Derartige Dichtelemente können als gleitende, insbesondere axial erstreckte, Dichtelemente ausgeführt sein, die mit dem Rotor, der sich in Radialrichtung, in Bezug auf die Achse, um die der Rotor drehbar vorgesehen ist, in den Innenraum erstreckt, in Kontakt stehen, wodurch der Innenraum in Radialrichtung, bspw. innenradial, begrenzt und abgedichtet wird. Die Dämpfungseinrichtung, bei der entweder die Gegenfläche oder das Dämpfungselement auf dem Rotor vorgesehen ist, kann dann innenradial unterhalb eines solchen Dichtelements und damit außerhalb des Innenraums platziert werden. Durch die direkte Platzierung der Dämpfungseinrichtung an dem Rotor wird eine möglichst direkte Dämpfungswirkung erzielt, ohne dass weitere Zwischenelemente benötigt werden, die zur Übertragung der Dämpfungswirkung auf den Rotor nötig wären.

Um einen Abstand der Dämpfungseinrichtung zu der Achse, um die der Rotor drehbar vorgesehen ist, und damit einen Hebelarm für die Dämpfungseinrichtung zu erhöhen, kann statt der vorstehend vorgeschlagenen Platzierung der Dämpfungseinrichtung auch vorgesehen sein, dass die Dämpfungseinrichtung axial, in Bezug auf die Achse, um die der Rotor drehbar vorgesehen ist, von dem Rotor und von dem Innenraum beabstandet angeordnet ist. Auf diese Weise kann die Dämpfungseinrichtung mit einem größeren radialen Abstand zur Achse, um die der Rotor drehbar vorgesehen ist, angeordnet werden, wobei dadurch ein größerer Hebelarm für die Dämpfungseinrichtung realisiert wird. Dadurch kann eine verbesserte Dämpfungswirkung auf den Rotor oder direkt auf die mechanische Schnittstelle aufgeprägt werden. Die Verbindung von Dämpfungseinrichtung und Rotor oder mechanischer Schnittstelle kann dabei über ein separates Element erfolgen, das drehfest mit dem Rotor oder der mechanischen Schnittstelle gekoppelt ist, um die Dämpfungswirkung zu übertragen. Auf diese Weise ist eine freiere Anordnung der Dämpfungseinrichtung in axialer und/oder radialer Richtung möglich.

Gemäß einer Ausführungsform ist die Bremse dazu ausgebildet, die gleitende Flächenpaarung der Dämpfungseinrichtung mit einer Axialkraft zu beaufschlagen. Die Axialkraft wird dabei durch den ersten Magnetfelderzeuger erzeugt. Der erste Magnetfelderzeuger, dessen Magnetfeld auf den ersten Spalt wirkt, bzw. diesen durchsetzt, erzeugt dabei auf den Rotor eine Kraft entlang der Achse des Rotors, nämlich die Axialkraft. Ist die gleitende Flächenpaarung so ausgerichtet, dass sie aus in Axialrichtung gegenüberliegenden Flächen besteht oder diese aufweist, so kann eine Axialkraft, die durch den ersten Magnetfelderzeuger erzeugt wird, in der gleitenden Flächenpaarung, genauer in den in Axialrichtung gegenüberliegenden Flächen der Flächenpaarung, abgestützt werden. Auf diese Weise wird die Reibkraft in der gleitenden Flächenpaarung und damit die Dämpfungswirkung erhöht. Die Axialkraft wird dabei durch eine Anziehungskraft hervorgerufen, die sich in Folge des ersten Magnetfeldes einstellt, das den Spalt durchsetzt und zwischen den Flächen von Rotor und Stator wirkt, die den ersten Spalt in Axialrichtung begrenzen.

Zur Abstützung der Axialkraft in der gleitenden Flächenpaarung kann der Rotor und/oder die Welle, auf der der Rotor vorgesehen ist, so gelagert sein, dass eine Abstützung dieser Axialkraft nicht oder nur teilweise durch die Lagerung des Rotors und/oder der Welle erfolgt, sodass zumindest ein Anteil oder die gesamte Axialkraft in der gleitenden Flächenpaarung abgestützt werden kann.

Entsprechend der Höhe der Feldstärke und/oder des magnetischen Flusses des ersten Magnetfeldes, das von dem ersten Magnetfelderzeuger erzeugt wird, stellt sich ein anderer Betrag der Axialkraft ein. Damit kann durch entsprechende Ansteuerung und damit verbundene Erzeugung des ersten Magnetfeldes durch den ersten Magnetfelderzeuger eine Einstellung der Axialkraft auf die gleitende Flächenpaarung erfolgen. Insbesondere kann vorgesehen sein, dass der erste Magnetfelderzeuger so angesteuert wird, dass die Axialkraft derart auf die gleitende Flächenpaarung wirkt, dass eine gewünschte Dämpfungswirkung eingestellt wird. Durch die Einstellung dieser Dämpfungswirkung wird automatisch durch die Wechselwirkung des eingestellten Magnetfeldes mit dem Pulver in dem ersten Spalt und der Erzeugung einer entsprechenden Reibstelle eine erste Bremswirkung erzeugt. Weist die Bremse einen zweiten Magnetfelderzeuger auf, kann beispielsweise der zweite Magnetfelderzeuger nun ergänzend zu dem ersten Magnetfelderzeuger wirken, und so angesteuert werden, dass sich eine zweite Bremswirkung einstellt, sodass die erste und zweite Bremswirkung kombiniert zu einer Gesamtbremswirkung eine gewünschte Sollbremswirkung ergeben. Auf diese Weise wird eine gewünschte Sollbremswirkung bei gleichzeitig optimierter Dämpfung realisiert.

Alternativ oder zusätzlich kann eine Axialkraft auf die gleitende Flächenpaarung auch durch den zweiten Magnetfelderzeuger erzeugt werden. Dies kann in gleicher Weise erfolgen, wie dies wie vorstehend für den ersten Magnetfelderzeuger beschrieben ist. Der zweite Magnetfelderzeuger kann bspw. dazu ausgebildet sein, die entsprechende Axialkraft durch eine magnetische Anziehungskraft zwischen Rotor und Stator zur erzeugen, indem dessen Magnetfeld den ersten Spalt durchsetzt. Alternativ kann neben dem ersten Spalt ein weiterer radial erstreckter Spalt zwischen Rotor und Stator vorhanden sein, der von dem Magnetfeld des zweiten Magnetfelderzeugers durchsetzt wird, wodurch dessen Axialkraftwirkung auf die gleitende Flächenpaarung erzeugt wird.

Vorstehend wurden Möglichkeiten zur Verwendung zweier Magnetfelderzeuger sowie die Verwendung einer Dämpfungseinrichtung diskutiert. Nachfolgend werden nun unterschiedliche Ausgestaltungen und Anordnungen von weiteren Spalten diskutiert. Dadurch kann insbesondere die Effizienz der Bremse verbessert werden.

Gemäß einer Ausführungsform ist zwischen dem Rotor und dem Stator mindestens ein zweiter Spalt vorgesehen. Dieser zweite Spalt ist durch den Rotor und den Stator in Radialrichtung bezogen auf die Achse begrenzt. In dem zweiten Spalt ist ein magnetorheologisches Pulver vorgesehen. Auf diese Weise wird eine weitere Möglichkeit geschaffen, eine Bremswirkung auf den Rotor zu erzeugen, wenn ein entsprechend ausgebildetes Magnetfeld diesen zweiten Spalt durchsetzt, zu dessen Erzeugung die Bremse vorzugsweise ausgebildet ist. Durch die Anordnung von Rotor und Stator bzw. Gestaltung des zweiten Spalts kann eine Ergänzung des ersten Spalts und damit der Reibstelle, genauer gesagt der Größe der wirksamen Reibstelle, realisiert werden, denn nun wirken sowohl in dem ersten Spalt als auch in dem zweiten Spalt separate Reibstellen, die rechnerisch zu einer wirksamen Reibstelle zusammengefasst werden können. Dabei ist deren Abstand zur Achse als wirksamer Hebelarm zu berücksichtigen, um die einzelnen Reibstellen vergleichbar zu machen. Zudem kann so ein Kompromiss zwischen axialer und radialer Erstreckung des ersten bzw. zweiten Spalts gefunden werden, sodass eine möglichst kompakte Bauform in axialer sowie radialer Richtung der Bremse realisiert werden kann.

Gemäß einer Ausführungsform ist der erste Magnetfelderzeuger dazu ausgebildet auch den zweiten Spalt mit einem Magnetfeld zu durchsetzen. Auf diese Weise kann die erste Bremswirkung in der sich einstellenden Reibstelle im ersten Spalt sowie im zweiten Spalt realisiert werden. Der erste sowie der zweite Spalt können, um eine jeweils gute Durchsetzung der Spalte zu erreichen, möglichst nah am ersten Magnetfelderzeuger positioniert sein. Insbesondere kann vorgesehen sein, dass der erste Magnetfelderzeuger so positioniert ist, dass er in einer Schnittebene, in der die Achse liegt, zumindest teilweise mit dem ersten Spalt und dem zweiten Spalt fluchtet. Zudem kann vorgesehen sein, dass in dieser Schnittebene ein möglichst geringer Abstand des ersten Magnetfelderzeugers zu dem ersten und zweiten Spalt besteht. Dies kann bspw. dadurch erreicht werden, dass der erste Magnetfelderzeuger in dem Stator eingelassen ist oder unmittelbar neben dem Spalt entsprechenden Spalt positioniert ist. Auf diese Weise wird sowohl der erste als auch der zweite Spalt möglichst vollständig von dem Magnetfeld, des ersten Magnetfelderzeugers durchsetzt, um eine möglichst hohe erste Bremswirkung zu erzielen. Insbesondere erstreckt sich somit der erste Spalt in radialer Richtung und der zweite Spalt in axialer Richtung ausgehend von dem ersten Magnetfelderzeuger. Es ist somit möglich, einen insgesamt höheren Menge magnetorheologischen Pulvers um den ersten Magnetfelderzeuger herum anzuordnen, sodass letztlich ein höherer Anteil an Pulver mit einem Magnetfeld hoher Feldstärke und/oder hohen magnetischen Flusses durchsetzt wird. Somit stellt diese Anordnung des ersten und zweiten Spalts sowie des ersten Magnetfelderzeugers nicht nur die Realisierung einer kompakteren Bauweise dar, sondern es wird zudem auch eine effizientere Realisierung der ersten Bremswirkung ermöglicht verglichen mit einem ausschließlich radial oder axial erstreckten Spalt.

Gemäß einer Ausführungsform kann vorgesehen sein, dass der zweite Magnetfelderzeuger dazu ausgebildet ist, den ersten Spalt mit dem zweiten Magnetfeld zu durchsetzen. Auf diese Weise ist eine kompakte Bauweise der Bremse möglich, bei der der erste sowie der zweite Magnetfelderzeuger auf denselben, nämlich den ersten Spalt wirken können, um eine erste bzw. zweite Bremswirkung zu erzeugen.

Alternativ oder zusätzlich kann vorgesehen sein, dass der zweite Magnetfelderzeuger dazu ausgebildet ist, den zweiten Spalt mit dem zweiten Magnetfeld zu durchsetzen. Wenn auch der erste Magnetfelderzeuger dazu ausgebildet ist, den zweiten Spalt mit einem Magnetfeld zu durchsetzen, ist auf diese Weise ist eine kompakte Bauweise der Bremse möglich, bei der der erste sowie der zweite Magnetfelderzeuger auf denselben, nämlich den zweiten Spalt wirken können, um eine erste bzw. zweite Bremswirkung zu erzeugen. Wenn der erste Magnetfelderzeuger nicht dazu ausgebildet ist, den zweiten Spalt mit einem Magnetfeld zu durchsetzen, so ist eine freie Positionierung des zweiten Spalts sowie des zweiten Magnetfelderzeugers möglich, da nicht berücksichtigt werden muss, dass auch das erste Magnetfeld des ersten Magnetfelderzeugers durch diesen Spalt verläuft bzw. das erste Magnetfeld den zweiten Spalt erreichen können muss. D.h., die Positionierung des zweiten Spalts ist in diesem Fall unabhängig von der Position des ersten Magnetfelderzeugers und des ersten Spalts.

Denkbar ist auch, dass der erste Magnetfelderzeuger die erste Bremswirkung im ersten Spalt erzeugt, den er mit dem Magnetfeld durchsetzt, während der zweite Magnetfelderzeuger die zweite Bremswirkung erzeugt, indem das zweite Magnetfeld zumindest nicht den ersten Spalt durchsetzt. So entsteht keine Axialkraft auf die Dämpfungseinrichtung durch den zweiten Magnetfelderzeuger. Insbesondere dann ist folgende Ausgestaltung möglich.

Gemäß einer Ausführungsform ist die Bremse dazu ausgebildet, den ersten Magnetfelderzeuger so anzusteuern, dass die gleitende Flächenpaarung der Dämpfungseinrichtung auf Basis eines Betriebszustands der Bremse mit der Axialkraft beaufschlagt wird. Durch das entsprechende Ansteuern des ersten Magnetfelderzeugers kann eine Schwingungsdämpfung der Bremse realisiert werden. Die Dämpfungswirkung, die sich durch die gleitende Flächenpaarung ergibt, ist abhängig von der Anpresskraft der gleitenden Flächenpaarung, die in diesem Fall durch die Axialkraft beeinflusst wird oder dieser entspricht. Mit anderen Worten: die Dämpfungswirkung der gleitenden Flächenpaarung kann durch gezielte Einstellung der Axialkraft und damit der Anpresskraft in der Flächenpaarung, beeinflusst werden. Die Anpresskraft wirkt dann bspw. auf die Gegenfläche und das Dämpfungselement.

Die zu dämpfende Schwingung kann insbesondere durch die in der Reibstelle im ersten oder zweiten Spalt entstehenden Stick-Slip-Effekte hervorgerufen werden. Die Wahrscheinlichkeit, dass solche Stick-Slip-Effekte auftreten, erhöht sich bei hohen Bremswirkungen, die auf den Rotor durch die in den Spalten entstehende Reibstellen aufgebracht werden, signifikant. Eine höhere Bremswirkung kann insbesondere dazu führen, dass der Rotor derart stark abgebremst wird bzw. dass ein Bremsmoment oder eine Bremskraft auf den Rotor wirkt, die im jeweiligen Spalt annähernd zu Haftreibungsbedingungen führt. Dann kann sich in der jeweiligen Reibstelle ein Zustand einstellen in dem zwischen Haft- und Gleitreibung gewechselt wird, was den unerwünschten Stick-Slip-Effekt verursachen kann.

Alternativ oder zusätzlich spielt die Relativgeschwindigkeit zwischen Rotor und Stator eine Rolle bei der Entstehung eines unerwünschten Stick-Slip-Effekts. Die Wahrscheinlichkeit, dass ein Stick-Slip-Effekt auftritt, kann sich erhöhen, wenn eine vergleichsweise niedrige Relativgeschwindigkeit zwischen Rotor und Stator vorliegt. Dann ist auch die Relativgeschwindigkeit in der jeweiligen Reibstelle entsprechend niedrig, was dazu führen kann, dass die Pulverpartikel im jeweiligen Spalt die Möglichkeit haben, sich in Folge der magnetischen Anziehung stärker zu verbinden, so dass sie letztlich mehrheitlich aneinanderhaften und so ein Haftreibungszustand in der entsprechenden Reibstelle vorliegt.

Beide Einflüsse in Kombination, also eine hohe Bremswirkung und eine niedrige Relativgeschwindigkeit wirken zudem verstärkend zusammen, so dass die höchste Wahrscheinlichkeit für das Auftreten von Stick-Slip-Effekten bei Betriebszuständen der Bremse vorliegt, bei denen bei niedrigen Relativgeschwindigkeiten eine hohe Bremswirkung auf den Rotor aufgebracht werden soll.

Die Bremse kann daher so ausgebildet sein, dass der aktuelle Betriebszustand der Bremse bei der Ansteuerung des ersten Magnetfelderzeugers und des zweiten Magnetfelderzeugers berücksichtigt wird. So kann die Neigung der Bremse für das Auftreten eines Stick-Slip-Effekts reduziert werden. Der Betriebszustand kann bspw. mit vorbestimmten Schwellwerten verglichen und dadurch bewertet werden, wobei die Schwellwerte in einer Steuereinheit der Bremse abgelegt sein können. Die Schwellwerte können darin als einzelne diskrete Schwellen abgelegt sein oder in Form einer Kennlinie oder eines Kennfeldes abgelegt sein. Kennlinie bzw. Kennfeld erlaubten eine flexiblere Berücksichtigung des Betriebszustandes der Bremse.

Gemäß einer Ausführungsform basiert der Betriebszustand der Bremse auf einer zu erzeugenden Sollbremswirkung und/oder auf einer aktuellen Relativgeschwindigkeit zwischen Rotor und Stator oder der Rotordrehzahl und/oder auf der ersten Bremswirkung und/oder auf der zweiten Bremswirkung. Derartige Größen können gegen die vorstehend beschriebenen Schwellwerte verglichen werden, so dass eine Aussage über den Betriebszustand getroffen werden kann.

Betrachtet man die Sollbremswirkung, die als die Sollgröße der Gesamtbremswirkung der Bremse verstanden werden kann, hat dies den Vorteil, dass man die Ansteuerung bereits vorauseilend, d.h. bevor eine tatsächliche Bremswirkung auf den Rotor durch Ansteuerung der Magnetfelderzeuger eingestellt wurde, so anpassen kann, dass die Wahrscheinlichkeit für das Auftreten eines Stick-Slip-Effekts entsprechend reduziert werden kann.

Die Relativgeschwindigkeit sowie die erste und zweite Bremswirkung stellen hingegen aktuell vorliegende Größen der Bremse dar. Sie können bspw. mittels Messung erfasst oder aus der Messung bestimmt werden. Die Relativgeschwindigkeit bzw. die Rotordrehzahl selbst kann bspw. mittels eines Drehzahlsensors am Rotor oder an der Welle, auf der der Rotor drehfest vorgesehen ist, erfasst werden. Die erste bzw. zweite Bremswirkung kann bspw. indirekt über Messung des Stroms des ersten bzw. zweiten Magnetfelderzeugers bestimmt werden. So kann alternativ oder zusätzlich zu einer Bremswirkung auch eine Betrachtung des entsprechenden elektrischen Stroms, der zur Ansteuerung des ersten bzw. zweiten Magnetfelderzeugers dient, zur Beschreibung des Betriebszustands herangezogen werden.

Die Bremse kann insbesondere zu folgender Ansteuerung der Magnetfelderzeuger gemäß den nachfolgenden Fällen ausgebildet sein. Dabei sind die einzelnen Fälle als optional zu betrachten. Es können auch nur einzelne Fälle und/oder andere Ansteuerlogiken realisiert sein.

Fall 1:

Liegt ein unkritischer Betriebszustand vor, kann vorgesehen sein, dass lediglich die Magnetfelderzeuger angesteuert werden, die bei ihrer Ansteuerung keine Axialkraft auf die Dämpfungseinrichtung ausüben. Dies kann bspw.

ein Magnetfelderzeuger sein, der ein Magnetfeld erzeugt, das lediglich einen radial begrenzten Spalt, wie den zweiten Spalt, durchsetzt. Auf diese Weise kann durch die Dämpfungseinrichtung lediglich eine Grundreibung bzw. Grunddämpfung erzeugt werden. Ist ein Vorspannungselement wie oben beschrieben vorgesehen kann dies die Grundreibung bzw. Grunddämpfung initial einstellen. Die Dämpfungseinrichtung kann aber auch so ausgebildet sein, dass gar keine Grundreibung bzw. Grunddämpfung durch die Dämpfungseinrichtung erzeugt wird, wenn keine Axialkraft auf die Dämpfungseinrichtung wirkt. Der erste Magnetfelderzeuger muss bei diesem Betriebszustand nicht angesteuert werden, was die Koordinierung der Ansteuerung der einzelnen Magnetfelderzeuger vereinfacht. Dieser unkritische Betriebszustand kann bspw. durch eine Sollbremswirkung beschrieben werden, die unter einem ersten vorbestimmten Sollbremswirkungsgrenzwert liegt, während die Relativgeschwindigkeit zwischen Rotor und Stator oder Rotordrehzahl über einem Relativgeschwindigkeitsgrenzwert liegt. Für eine Sollbremsmoment $M_{Soll}$ als Sollbremswirkung und eine Relativgeschwindigkeit $V_{Ist}$ gilt dann:

$$wenn\ M_{Soll} < M_{Grenz1}\ \&\ V_{Ist} > V_{Grenz2}\ \Rightarrow\ BW_1 = 0,\quad BW_2 > 0$$

$M_{Grenz1}$ ist dabei der erste vorbestimmte Sollbremswirkungsgrenzwert, in diesem Fall ein Sollbremsmoment, das insgesamt auf den Rotor wirken soll. $V_{Grenz2}$ ist ein zweiter Relativgeschwindigkeitsgrenzwert. $BW_1$ und $BW_2$ stehen für die erste Bremswirkung bzw. die zweite Bremswirkung hervorgerufen durch den ersten bzw. durch den zweiten Magnetfelderzeuger. Diese können bspw. durch die jeweilige Stromstärke erfasst werden, die zur Magnetfelderzeugung durch den jeweiligen Magnetfelderzeuger gestellt wird. Im betrachteten Fall ist die Bremswirkung $BW_1$ des ersten Magnetfelderzeugers Null, so dass auch keine Axialkraft durch diesen Magnetfelderzeuger in die Dämpfungseinrichtung eingebracht wird. Da die Relativgeschwindigkeit $V_{Ist}$ über dem Relativgeschwindigkeitsgrenzwert $V_{Grenz2}$ liegt und gleichzeitig $M_{Soll}$ kleiner als der erste vorbestimmte Sollbremswirkungsgrenzwert $M_{Grenz1}$ ist, ist die Neigung der Bremse, dass Stick-Slip-Effekte einsetzen könnten, vergleichsweise gering. Daher kann hier auf die Beaufschlagung der Dämpfungseinrichtung mit einer Axialkraft verzichtet werden.

Fall 2:

Für den Fall, dass die Relativgeschwindigkeit $V_{Ist}$ unter dem zweiten Relativgeschwindigkeitsgrenzwert $V_{Grenz2}$ und über einem ersten Relativgeschwindigkeitsgrenzwert $V_{Grenz1}$ liegt, kann vorgesehen sein, dass nun eine Bremswirkung $BW_1$ durch den ersten Magnetfelderzeuger erzeugt wird. Dabei wird eine gewünschte Axialkraft eingestellt, die auf die Dämpfungseinrichtung wirkt. Die weitere Bremswirkung zur Erreichung der Sollbremswirkung kann dann ergänzend durch die Bremswirkung $BW_2$ des zweiten Magnetfelderzeugers erzeugt werden. Diese Bremswirkung $BW_2$ ist dann größer als Null und kann auch größer als die Bremswirkung des ersten Magnetfelderzeugers sein, da $M_{Soll}$ noch unter dem ersten kritischen Sollbremswirkungsgrenzwert $M_{Grenz1}$, der so gewählt ist, dass das Auftreten von Stick-Slip-Effekten in erster Linie abhängig von der Relativgeschwindigkeit $V_{Ist}$ ist. Auf diese Weise kann eine gewünschte Dämpfungswirkung bei kombiniertem Betrieb der Magnetfelderzeuger erreicht werden. Es gilt bspw.:

$$wenn\ M_{Soll} < M_{Grenz1}\ \&\ V_{Grenz1} < V_{Ist} < V_{Grenz2}\ \Rightarrow BW_2 > BW_1 \geq 0$$

Fall 3:

Sollte die Relativgeschwindigkeit $V_{Ist}$ unter dem ersten Relativgeschwindigkeitsgrenzwert $V_{Grenz1}$ liegen, so dass der Betriebszustand verglichen mit den vorstehend beschriebenen Betriebszuständen eine langsamere Rotorbewegung betrifft, kann die Bremswirkung $BW_1$ des ersten Magnetfelderzeugers so gewählt werden, dass sie in jedem Fall größer Null ist, so dass eine Axialkraft auf die Dämpfungseinrichtung wirkt und diese dadurch eine Anpresskraft erfährt, so dass die Dämpfungswirkung erhöht wird. Der erste und der zweite Magnetfelderzeuger werden dabei so angesteuert, dass in Kombination mit der Reibkraft der Dämpfungseinrichtung, die ebenfalls auf den Rotor wirkt, die Sollbremswirkung $M_{Soll}$ erreicht wird. Da die Dämpfungswirkung bei einer Sollbremswirkung $M_{Soll}$ kleiner dem Sollbremswirkungsgrenzwert $M_{Grenz1}$ moderat ausfallen kann, kann die Bremswirkung $BW_1$ kleiner als die Bremswirkung $BW_2$ gewählt werden. Es gilt bspw.:

$$wenn\ M_{Soll} < M_{Grenz1}\ \&\ V_{Ist} < V_{Grenz1}\ \Rightarrow BW_2 > BW_1 > 0$$

Fälle 4 bis 6:

Bei Betriebszuständen, bei denen die Sollbremswirkung $M_{Soll}$ größer dem Sollbremswirkungsgrenzwert $M_{Grenz1}$ aber noch kleiner als ein zweiter Sollbremswirkungsgrenzwert $M_{Grenz2}$ ist, kann eine stärkere Einbeziehung des ersten Magnetfelderzeugers realisiert werden, so dass sukzessive mit abnehmender Relativgeschwindigkeit $V_{Ist}$: eine stärkere Bremswirkung $BW_1$ durch den ersten Magnetfelderzeuger generiert wird, was auch einer sukzessiven Zunahme der Dämpfungswirkung entspricht. Es gilt bspw.:

Fall 4:

$$wenn\ M_{Grenz2} >\ M_{Soll} > M_{Grenz1}\ \&\ V_{Ist} >\ V_{Grenz2}\ \Rightarrow\ BW_2 > BW_1 > 0$$

Fall 5:

$$wenn\ M_{Grenz2} >\ M_{Soll} > M_{Grenz1}\ \&\ V_{Grenz1} < V_{Ist}\ < V_{Grenz2}\ \Rightarrow BW_2 \geq BW_1 > 0$$

Fall 6:

$$wenn\ M_{Grenz2} >\ M_{Soll} > M_{Grenz1}\ \&\ V_{Ist} < V_{Grenz1}\ \Rightarrow BW_1 \geq BW_2$$

Fälle 7 bis 9

Liegen Betriebszustände vor, bei denen die Sollbremswirkung $M_{Soll}$ größer als der zweiter Sollbremswirkungsgrenzwert $M_{Grenz2}$ ist, kann die Bremswirkung $BW_1$ des ersten Magnetfelderzeugers bei der Erzeugung der Bremswirkung weiter erhöht werden, da die Wahrscheinlichkeit für auftretende Stick-Slip-Effekte durch die vergleichsweise hohe Sollbremswirkung $M_{Soll}$ erhöht wird. Es gilt bspw.:

Fall 7:

$$wenn\ M_{Soll} > M_{Grenz2}\ \&\ V_{Ist}\ > V_{Grenz2}\ \Rightarrow\ BW_1 \geq BW_2 \geq 0$$

Fall 8:

$$wenn\ M_{Soll} > M_{Grenz2}\ \&\ V_{Grenz1} < V_{Ist}\ < V_{Grenz2}\ \Rightarrow BW_1 > BW_2 \geq 0$$

Fall 9:

$$wenn\ M_{Soll} > M_{Grenz2}\ \&\ V_{Ist} < V_{Grenz1}\ \Rightarrow BW_1 \geq BW_2$$

Fall 10:
Liegen Betriebszustände vor, bei denen $M_{Soll} > M_{Grenz3}$ gilt, wobei $M_{Grenz3}$ ein dritter Sollbremswirkungsgrenzwert ist, der größer als $M_{Grenz2}$ ist, kann unabhängig von der Relativgeschwindigkeit $V_{Ist}$ eine verstärkte Ansteuerung des ersten Magnetfelderzeugers vorgenommen werden.

Auffällig bei der obigen Steuerlogik ist, dass mit steigendem $M_{Soll}$ und fallendem $V_{Ist}$ eine stärkere Einbindung des ersten Magnetfelderzeugers und somit eine Erhöhung der Bremswirkung $BW_1$ stattfindet, so dass die Dämpfungswirkung, die in Folge der Axialkraft durch die Dämpfungseinrichtung erzeugt wird, erhöht wird. Auf diese Weise können die Stick-Slip-Effekt effizient reduziert werden.
Typische Werte für die oben genannten Grenzwerte sind üblicherweise bei einer Bremse, die für einen Force-Feedback-Aktuator ausgebildet ist, der auf die Lenksäule einer Lenkeinrichtung wirkt:

$M_{Grenz1}$: besonders vorteilhaft 2 Nm, vorteilhaft 1 Nm bis 4 Nm
$M_{Grenz2}$: besonders vorteilhaft 5 Nm, vorteilhaft größer 4 Nm bis unter 10 Nm
$M_{Grenz3}$ besonders vorteilhaft 10 Nm, vorteilhaft 10 Nm bis 20 Nm
$V_{Grenz1}$ besonders vorteilhaft 30 °/s , vorteilhaft 0 °/s bis unter 60 °/s
$V_{Grenz2}$ besonders vorteilhaft 100°/s, vorteilhaft 60 °/s bis 240 °/s

Bei den Grenzwerten handelt es sich um Beträge, da eine solche Bremse üblicherweise bidirektional, also für beide Drehrichtungen der Lenksäule wirkt.
Unabhängig von den vorstehend beschriebenen Fällen kann gelten:
In dem durch $M_{soll}$ und $V_{Ist}$ aufgespannten zweidimensionalen Zustandsraum ist durch die obigen Grenzwerte eines von mehreren möglichen "Feldern" mit einer jeweiligen Strategie zur Bestimmung der Bremswirkungen $BW_1$ und $BW_2$ definiert. Der Betriebszustand der Bremse umfassend $M_{soll}$ und $V_{Ist}$ wandert dann zeitabhängig durch diesen Zustandsraum zwischen diesen Feldern. Die Bestimmung von $BW_1$ und $BW_2$ kann anstatt mit mehreren Wenn-Dann-Abfragen wie vorstehend im Rahmen der Fälle 1 bis 10 ebenso mit Kennfeldern über diesem zweidimensionalen Zustandsraum erfolgen, wobei dann auch mögliche Lücken zwischen mehreren Feldern gefüllt werden, z.B. durch Interpolation. Alternativ oder zusätzlich können derartige Lücken zwischen den Feldern aber z.B. auch durch eine Hysterese überwunden werden. Die Hysterese kann bspw. so ausgestaltet sein, dass der $BW_1$- und/oder der $BW_2$-Wert aus dem letzten bestimmenden Feld beibehalten wird, bis wieder ein Feld erreicht wird, wodurch ein neuer Wert für $BW_1$ und/oder $BW_2$ bestimmt wird. Ebenso können weitere Abfragen bzw. entsprechende Felder oder Interpolationspunkte (z.B. für Maximalwerte oder ein Extrapolationsverhalten am Rand des Zustandsraumes) definiert sein. Lücken können bspw. in diesem Sinne als Bereiche in diesem Zustandsraum verstanden werden, für die keine entsprechende Wenn-Dann-Abfrage definiert ist.

Alternativ oder zusätzlich kann vorgesehen sein, dass der zweite Magnetfelderzeuger dazu ausgebildet ist, einen dritten Spalt der Bremse mit dem zweiten Magnetfeld zu durchsetzen. Der dritte Spalt kann als radial erstreckter Spalt ausgebildet sein, der in axialer Richtung durch sich gegenüberliegende Flächen von Rotor und Stator begrenzt ist. Der dritte Spalt kann in Form und Erstreckung gleich ausgebildet sein wie der erste Spalt, d. h., dass die Bremse in axialer Richtung beabstandet vom ersten Spalt einen zweiten Spalt aufweist. Auf diese Weise ist eine Verdopplung der wirksamen Reibstelle realisierbar, da nun zwei gleich große bzw. gleich erstreckte Spalte vorhanden sind. Alternativ oder zusätzlich kann die radiale Erstreckung des dritten Spalts von der des ersten Spalts abweichen. Beispielsweise kann vorgesehen sein, dass die Flächen von Rotor und Stator, die den dritten Spalt axial begrenzen, eine andere radiale Erstreckung aufweisen als die des ersten Spalts. Beispielsweise können sich diese weiter in Radialrichtung zur Achse hin erstrecken, als jene des ersten Spalts und/oder sie können eine geringere Erstreckung in Radialrichtung hin zur Achse aufweisen. Alternativ oder zusätzlich können sich diese in Radialrichtung weiter nach außen, d. h. von der Achse weg, erstrecken als die entsprechenden Flächen des ersten Spalts. Mit anderen Worten, der dritte Spalt kann eine radial größere oder kleinere Erstreckung aufweisen als der erste Spalt, worin letztlich ein unterschiedlicher Abstand der effektiven Reibstelle des dritten Spalts radial zur Achse im Vergleich zu dem Abstand radial zur Achse der effektiven Reibstelle des ersten Spalts entstehen kann. Da der radiale Abstand der entsprechenden Reibstelle zur Achse einem Hebelarm entspricht, kann so über die geometrische Gestaltung des dritten Spalts die Wirkweise des dritten Spalts zur Erzeugung der Bremswirkung der Bremse beeinflusst werden.

Alternativ oder zusätzlich kann vorgesehen sein, dass der zweite Magnetfelderzeuger dazu ausgebildet ist, einen vierten Spalt der Bremse mit dem zweiten Magnetfeld zu durchsetzen. Der vierte Spalt kann als axial erstreckter Spalt ausgebildet sein, der in radialer Richtung durch sich gegenüberliegende Flächen von Rotor und Stator begrenzt ist. Der vierte Spalt kann in Form und Erstreckung gleich ausgebildet sein wie der zweite Spalt, d. h., dass die Bremse einen geometrisch zum zweiten Spalt identischen vierten Spalt aufweist, der sich axial erstreckt. Auf diese Weise ist eine Verdopplung der wirksamen Reibstelle realisierbar, da nun zwei gleich große bzw. gleich erstreckte Spalte vorhanden sind. Alternativ kann der vierte Spalt in seiner Gestaltung vom zweiten Spalt abweichen. Beispielsweise kann vorgesehen sein, dass die den vierten Spalt in Radialrichtung begrenzenden Flächen von Rotor und Stator einen geringeren oder größeren Abstand zur Achse in Radialrichtung aufweisen als die entsprechenden begrenzenden Flächen von Rotor und Stator des zweiten Spalts. Mit anderen Worten, der vierte Spalt kann radial weiter innen oder weiter außen liegen als der zweite Spalt. Im Resultat stellt sich somit im vierten Spalt eine effektive Reibstelle ein, die einen anderen Abstand aufweist als die effektive Reibstelle des zweiten Spalts. Somit ergibt sich für den vierten Spalt ein anderer Hebelarm, mit dem die in dem Spalt erzeugte Bremskraft auf den Rotor wirkt, als im zweiten Spalt. Alternativ oder zusätzlich ist möglich, dass die axiale Erstreckung des vierten Spalts von der axialen Erstreckung des zweiten Spalts abweicht. Die axiale Erstreckung des vierten Spalts kann größer oder kleiner sein als die des zweiten Spalts. Ist sie größer, kann bei entsprechender Positionierung des zweiten Magnetfelderzeugers eine größere axial erstreckte effektive Reibstelle in dem vierten Spalt gebildet werden, verglichen mit dem zweiten Spalt. Ist sie kleiner, kann bei entsprechender Positionierung des zweiten Magnetfelderzeugers eine kleinere axial erstreckte effektive Reibstelle in dem vierten Spalt gebildet werden, verglichen mit dem zweiten Spalt. Somit kann über die geometrische Gestaltung des vierten Spalts die Wirkweise des vierten Spalts zur Erzeugung der Bremswirkung der Bremse beeinflusst werden.

Nachfolgend werden nun weitere Aspekte der Erfindung erläutert, die die vorstehend beschriebene Bremse nutzen.

Gemäß einem Aspekt der Erfindung ist ein Verfahren zur Steuerung einer Bremse wie oben beschrieben vorgesehen. Das Verfahren weist die Verfahrensschritte auf:

- Ansteuern des ersten Magnetfelderzeugers zur Erzeugung einer Axialkraft auf die gleitende Flächenpaarung der Dämpfungseinrichtung und zur Erzeugung einer ersten Bremswirkung auf den Rotor;
- Ansteuern des zweiten Magnetfelderzeugers zur Erzeugung einer zweiten Bremswirkung auf den Rotor.

Das Verfahren kann insbesondere entsprechend der oben beschriebenen Ansteuermöglichkeiten für die Bremse ausgebildet sein.

Gemäß einer Ausführungsform erfolgt das Ansteuern des ersten Magnetfelderzeugers und das Ansteuern des zweiten Magnetfelderzeugers abhängig von einem Betriebszustand der Bremse.

Gemäß einer Ausführungsform erfolgt das Ansteuern des ersten Magnetfelderzeugers so, dass die gleitende Flächenpaarung der Dämpfungseinrichtung auf Basis eines Betriebszustands der Bremse mit der Axialkraft beaufschlagt wird. So kann insbesondere eine Neigung der Bremse, dass NVH-Effekte auftreten, reduziert werden.

Gemäß einer Ausführungsform weist der Betriebszustand der Bremse eine zu erzeugende Sollbremswirkung und/oder eine aktuelle Relativgeschwindigkeit zwischen Rotor und Stator und/oder die erste Bremswirkung und/oder die zweite Bremswirkung auf. Dies sind Werte, die aus der Ansteuerung zur Verfügung stehen und/oder ohnehin als Messwerte zur Verfügung stehen können oder aus Messwerten ableitbar sind. Somit ist eine aufwandsarme Beschreibung des Betriebszustands möglich.

Gemäß einer Ausführungsform ist vorgesehen, dass der erste Magnetfelderzeuger nicht angesteuert wird, wenn die zu erzeugende Sollbremswirkung unter einem Sollbremswirkungsgrenzwert liegt und die aktuelle Relativgeschwindigkeit zwischen Rotor und Stator über einem Relativgeschwindigkeitsgrenzwert liegt. Ein solcher Betriebszustand kann als unkritisch für NVH-Effekte gesehen werden, so dass hier eine weitere Dämpfungswirkung durch Axialkraftbeaufschlagung der Dämpfungseinrichtung nicht benötigt wird. Somit stellt dieser keine Axialkraft auf die gleitende Flächenpaarung der Dämpfungseinrichtung ein. Auf diese Weise kann bei solchen NVH-unkritischen Zuständen erhöhte Reibung in der gleitenden Flächenpaarung vermieden werden.

Alternativ oder zusätzlich kann vorgesehen sein, dass der erste Magnetfelderzeuger ergänzend oder ausschließlich angesteuert wird, wenn die zu erzeugende Sollbremswirkung über dem Sollbremswirkungsgrenzwert liegt und/oder die aktuelle Relativgeschwindigkeit zwischen Rotor und Stator unter einem Relativgeschwindigkeitsgrenzwert liegt. Ein solcher Betriebszustand kann NVH-kritisch sein. Hier kann das Verfahren so ausgeführt werden, dass die Dämpfungswirkung der Dämpfungseinrichtung durch den ersten Magnetfelderzeuger eingestellt wird, indem dieser eine Axialkraft auf die gleitende Flächenpaarung der Dämpfungseinrichtung einstellt. So kann NVH-Effekten vorgebeugt werden.

Die oben beschriebene Bremse kann zur Durchführung des vorstehend beschriebenen Verfahrens ausgebildet sein.

Gemäß einem Aspekt ist ein Force-Feedback-Aktuator vorgesehen. Der Force-Feedback-Aktuator weist eine Antriebseinheit, eine magnetorheologische Bremse wie vorstehend beschrieben und eine mechanische Schnittstelle auf. Der Force-Feedback-Aktuator ist dazu ausgebildet, eine Kraft- bzw. eine Momentenwirkung auf die mechanische Schnittstelle aufzuprägen, um über die mechanische Schnittstelle eine Rückmeldung an einen Anwender zu geben. Die mechanische Schnittstelle kann als drehbare Welle ausgebildet sein, so dass eine Dreh- oder Schwenkbewegung durch den Force-Feedback-Aktuator mit der entsprechenden Momentenrückmeldung beaufschlagt werden kann. Die drehbare Welle kann insbesondere koaxial zur Achse, um die der Rotor der Bremse drehbar vorgesehen ist, angeordnet sein, um eine kompakte Bauform des Force-Feedback-Aktuators zu realisieren. Die mechanische Schnittstelle der Bremse, kann dabei mit der mechanischen Schnittstelle des Force-Feedback-Aktuators verbunden sein. Die Antriebseinheit kann ein E-Motor sein, der eine Drehachse aufweist. Die Drehachse der Antriebseinheit kann insbesondere koaxial zur Achse der drehbaren Welle des Force-Feedback-Aktuators und vorzugsweise zusätzlich koaxial zur Achse, um die der Rotor der Bremse drehbar vorgesehen ist, angeordnet sein, um eine kompakte Bauform des Force-Feedback-Aktuators zu realisieren. Eine Verwendung eines E-Motors als Antriebseinheit erlaubt ein schnelles Ansprechverhalten des Force-Feedback-Aktuators. Die mechanische Schnittstelle des Force-Feedback-Aktuators kann mit einem Eingabeelement verbunden sein, über das ein Anwender mit der mechanischen Schnittstelle haptisch in Kontakt steht, und über das er manuelle Eingaben tätigen kann. Das Eingabeelement kann insbesondere als Lenkelement, wie ein Lenkrad, als Drehknopf und/oder als Schwenkelement, wie ein Joystick, ausgebildet sein. Auf diese Weise kann der Force-Feedback-Aktuator je nach Anwendungsfall ausgebildet werden. Der Force-Feedback-Aktuator ist dazu ausgebildet, das haptische Feedback auf die mechanische Schnittstelle des Force-Feedback-Aktuators und damit auf das Eingabeelement mittels der Bremse und/oder mittels der Antriebseinheit aufzuprägen. Auf diese Weise sind unterschiedliche haptische Rückmeldung an einen Anwender möglich. Insbesondere kann eine unterstützende Rückmeldung erzeugt werden, wenn die Antriebseinheit die mechanische Schnittstelle des Force-Feedback-Aktuators im Sinne der Eingabe durch den Anwender antreibt. Es kann auch eine bremsende Rückmeldung erzeugt werden, indem die Bremse und/oder die Antriebseinheit so angesteuert werden, dass eine bremsende Rückmeldung erzeugt wird, d.h. wenn die Bremse und/oder die Antriebseinheit die mechanische Schnittstelle des Force-Feedback-Aktuators gegen die Eingabe durch den Anwender abbremst. Somit sind unterschiedliche haptische Rückmeldungen an einen Anwender darstellbar.

Gemäß einem Aspekt der Erfindung ist eine Lenkeinrichtung für ein Fahrzeug vorgesehen. Die Lenkeinrichtung weist ein als Lenkelement ausgebildetes Eingabeelement, einen Force-Feedback-Aktuator wie oben beschrieben oder eine magnetorheologische Bremse wie oben beschrieben auf. Das Eingabeelement ist drehfest mit der mechanischen Schnittstelle des Force-Feedback-Aktuators oder drehfest mit einer mechanischen Schnittstelle der Bremse gekoppelt.

Das Lenkelement kann bspw. als Lenkrad oder Joystick ausgebildet sein, worüber ein Fahrer als Anwender Lenkeingaben in die Lenkeinrichtung eingeben kann. Die Lenkeinrichtung ist dazu ausgebildet, über die Kopplung des Lenkelements mit der mechanischen Schnittstelle der Bremse bzw. des Force-Feedback-Aktuators eine haptische Rückmeldung an den Fahrer zu geben. Dies ist insbesondere von Vorteil, wenn die Lenkeinrichtung als Steer-by-Wire-Lenkeinrichtung ausgebildet ist, bei der ein mechanischer Durchtrieb zu den gelenkten Rädern fehlt, und somit eine haptische Rückmeldung der gelenkten Achse bzw. der gelenkten Räder der Achse nicht direkt an das Lenkelement erfolgen kann. Aber auch bei einer Lenkeinrichtung, die den mechanischen Durchtrieb aufweist, kann mittels der Bremse und/oder mittels des Force-Feedback-Aktuators ein gewünschtes Lenkgefühl erzeugt werden, das der Fahrer dann über das Lenkelement haptisch erfahren kann.

Detailbeschreibung anhand Zeichnung

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigt:

Fig. 1    eine schematische Schnittdarstellung einer magnetorheologischen Bremse gemäß einer Ausführungsform der Erfindung,
Fig. 2    eine schematische Schnittdarstellung einer magnetorheologischen Bremse gemäß einer Ausführungsform der Erfindung,
Fig. 3    eine schematische Darstellung eines Force-Feedback-Aktuators,
Fig. 4    eine schematische Darstellung einer Lenkeinrichtung für ein Fahrzeug, und
Fig.5    eine schematische Darstellung eines Zeitverlaufs einer Ansteuerung der Bremse aus Fig. 2.

Die Figuren sind lediglich schematischer Natur und dienen nur dem Verständnis der Erfindung. Die gleichen Elemente sind mit denselben Bezugszeichen versehen.

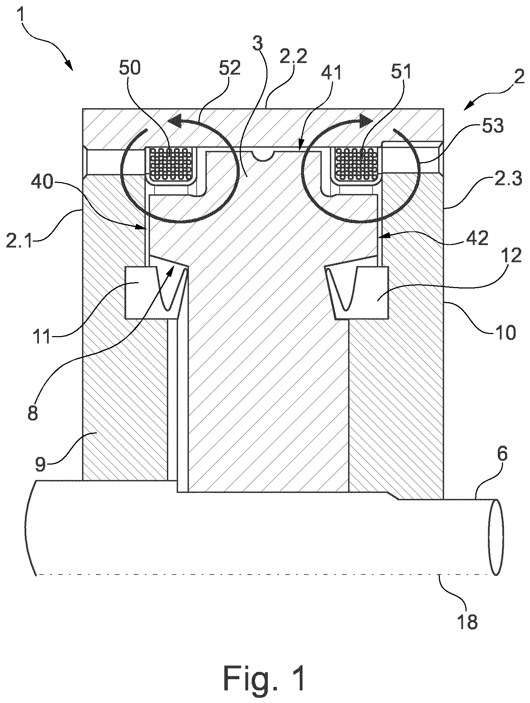

Fig. 1 zeigt eine schematische Schnittdarstellung einer magnetorheologischen Bremse gemäß einer Ausführungsform der Erfindung.
Es ist eine magnetorheologischen Bremse 1 gezeigt. Die Bremse 1 weist einen Rotor 3 auf, der auf einer Welle 6 drehfest vorgesehen ist. Die Welle 6 erstreckt sich hierbei in der Zeichnung von links nach rechts, wobei sie um die Achse 18, die horizontal verläuft, drehbar vorgesehen ist.
Zur Anbindung von Elementen, wie haptischen Bedienelementen oder drehbaren Wellen, kann ein Abschnitt der Welle 6 als mechanische Schnittstelle der Bremse 1 ausgebildet sein. Angaben zur Positionierung oder Richtung einiger Elemente der Bremse 1, werden in der Zeichnung in Bezug auf die Achse 18 gemacht. D. h., dass in der Zeichnung eine Radialrichtung eine vertikal nach oben verlaufende Richtung ist, und dass eine Axialrichtung eine Richtung parallel zur Achse 18 ist, die in der Zeichnung von links nach rechts verläuft.
Der Rotor 3 ist so angeordnet, dass er rotationssymmetrisch zur Achse 18 ausgebildet ist und sich bei Drehung um die Achse 18 relativ zu einem Stator 2 bewegt, der gegenüber dem Rotor 3 stillsteht. Der Stator 2 ist hier in mehrere Statorabschnitte 2.1, 2.2, 2.3 unterteilt, die zu dem Stator 2 zusammengesetzt sind, was eine einfache Montierbarkeit des Rotors 3 sowie des Stators 2 ermöglicht. Die Statorabschnitt 2.1, 2.3 wirken in der gezeigten Ausführungsform als Gehäuseabschnitte 9, 10, die einen Innenraum 8 der Bremse 1 in Axialrichtung begrenzen.
Ein erster in Radialrichtung verlaufender Statorabschnitt 2.1 begrenzt mit einer radial verlaufenden Fläche, die dem Rotor 3 zugewandt ist, in Axialrichtung einen Spalt 40. Der Spalt 40 wird ferner in Axialrichtung durch eine radial verlaufende Fläche des Rotors 3 begrenzt, die dem Statorabschnitt 2.1 zugewandt ist.
Ein zweiter Statorabschnitt 2.2, der in der Zeichnung in Axialrichtung erstreckt ist, begrenzt außenradial einen zweiten Spalt 41. Der zweite Spalt 41 wird innenradial durch eine dem zweiten Statorabschnitt 2.2 zugewandte Fläche des Rotors 3 begrenzt. Sowohl der zweite Statorabschnitt 2.2 als auch die innenradial den Spalt 41 begrenzende Fläche des Rotors 3 erstrecken sich gleichmäßig in Umfangsrichtung in Bezug auf die Achse 18, sodass der zweite Spalt 41 in Umfangsrichtung in Bezug auf die Achse 18 einen konstanten Querschnitt aufweist.
Ein erster Magnetfelderzeuger 50 ist so innerhalb des Innenraums 8 positioniert, dass er zumindest teilweise in Radialrichtung in der Flucht des ersten Spalts 40 sowie in Axialrichtung in der Flucht des zweiten Spalts 41 liegt. Das erste Magnetfeld 52, das durch den ersten Magnetfelderzeuger 50 erzeugt werden kann, breitet sich kreisförmig um den Magnetfelderzeuger 50 aus und durchsetzt dabei sowohl den ersten Spalt 40 als auch den zweiten Spalt 41. Der erste Magnetfelderzeuger 50 kann beispielsweise als elektrische Spule ausgebildet sein, die entsprechend ihrer Windung und/oder Bestromung das in der Zeichnung im Gegenuhrzeigersinn orientierte erste Magnetfeld 52 erzeugt.
In der Bremse 1, genauer im Innenraum 8 der Bremse 1, ist ein magnetorheologisches Pulver vorgesehen, das wie oben beschrieben in Reaktion auf das erste Magnetfeld 52 seine Scher- und Reibeigenschaften durch Kettenbildung einzelner Pulverpartikel in den Spalten 40, 41 ändert. D. h. durch Anlegen des ersten Magnetfeldes 52 bilden sich in dem ersten Spalt 40 im Wesentlichen axial verlaufende Pulverketten und in dem zweiten Spalt 41 radial verlaufende Pulverketten aus. Bei Drehung des Rotors 3 gegenüber dem Stator 2 scheren diese Ketten ab, wobei sich an der Stelle der Abscherung eine entsprechende Reibstelle ausbildet. D. h., dass sich in dem ersten Spalt 40 eine radial verlaufende Reibstelle ausbildet und in dem zweiten Spalt 41 eine axial verlaufende Reibstelle ausbildet. Durch die Anordnung des ersten Magnetfelderzeuger 50 sowie der Spalte 40 und 41 kann auf diese Weise eine Erhöhung der Fläche der effektiven Reibstelle realisiert werden, wobei eine axiale und radiale Erstreckung der Bremse 1 begrenzt wird. D.h., durch die Anordnung der Spalte 40 und 41 ist eine größere Erstreckung dieser Spalte 40, 41 zur Erzielung derselben Bremswirkung infolge des ersten Magnetfelds 52 verglichen mit einer Bremse, die ausschließlich den ersten Spalt 40 oder den zweiten Spalt 41 aufweist, nicht nötig. Zudem hat die Anordnung der Spalte 40, 41 den Vorteil, dass beide Spalte sehr nahe an dem ersten Magnetfelderzeuger 50 positioniert werden können, sodass ein möglichst großer Durchsatz beider Spalte 40, 41 durch das erste Magnetfeld 52 ermöglicht wird. Dadurch stellt sich zudem eine effizientere Erzeugung der ersten Bremswirkung ein.

Damit der Innenraum 8 der Bremse 1 abgedichtet ist, sind Dichtelemente 11, 12 vorgesehen, die auf dem Gehäuseabschnitt 9 bzw. 10 positioniert sind und gleitend mit axialen Seitenflächen des Rotors 3 in Kontakt sind. Auf diese Weise wird verhindert, dass das magnetorheologische Pulver den Innenraum in Richtung der Achse 18 bzw. der Welle 6 verlässt, sodass insbesondere Schäden an Wellenlagern o.ä. Vermieden werden können.

Optional weist die Bremse 1 einen zweiten Magnetfelderzeuger 51 auf. Dieser kann ebenso wie der erste Magnetfelderzeuger 50 als Spule ausgebildet sein. Durch entsprechende Ausgestaltung der Windungen und oder der Bestromung des zweiten Magnetfelderzeugers 51 kann dadurch ein zweites Magnetfeld 53 erzeugt werden, das dem ersten Magnetfeld 52 gegenüber gegensinnig, d.h. in der Zeichnung im Uhrzeigersinn orientiert ist.

Die Bremse 1 weist ferner einen optionalen dritten Spalt 42 auf, der sich wie der erste Spalt 40 in Radialrichtung in Bezug auf die Achse 18 erstreckt. In Axialrichtung ist der dritte Spalt 42 dabei begrenzt durch den sich radial erstreckenden Statorabschnitt 2.3 sowie durch eine diesem Statorabschnitt 2.3 gegenüberliegende Seitenfläche des Rotors 3, die in der Zeichnung nach rechts weist.

Zu erkennen ist, dass das zweite Magnetfeld 53 in Folge der Positionierung des zweiten Magnetfelderzeugers 51 in der Flucht des zweiten Spalts 41 sowie des dritten Spalts 42 sowie mit minimalem Abstand zu diesen Spalten 41, 42, diese Spalte 41, 42 entsprechend durchsetzt. Da auch der dritte Spalt 42 mit dem magnetorheologischen Pulver gefüllt ist, entsteht in dem dritten Spalt 42 eine Reibstelle in gleicher Weise wie in dem ersten Spalt 40. Ist das zweite Magnetfeld 53 in seiner Feldstärke identisch mit dem ersten Magnetfeld 52, so kann die zweite Bremswirkung auf den Rotor 3, die durch den zweiten Magnetfelderzeuger 51 erzeugt wird, gleich groß wie die erste Bremswirkung auf den Rotor 3 ausfallen, die durch den ersten Magnetfelderzeuger 50 erzeugt wird.

Wie in der Zeichnung zu erkennen ist, erstreckt sich der zweite Spalt 41 axial hin zum zweiten Magnetfelderzeuger 51. Der dritte Spalt 42 erstreckt sich ebenso radial hin zu dem zweiten Magnetfelderzeuger 51, wie sich der erste Spalt 40 zum ersten Magnetfelderzeuger 50 hin erstreckt. In Bezug auf die Spalte 40, 41, 42 sowie die Positionierung der Magnetfelderzeuger 50, 51 ist die Bremse 1, genauer gesagt, der gezeigte Schnitt, achsensymmetrisch zu einer vertikal verlaufenden Achse ausgebildet.

Durch die gegensinnige Ausbildung der Magnetfelder 52, 53 wirken in den Spalten 40, 42 Axialkräfte auf den Rotor 3, die einander entgegengesetzt sind. Die Axialkräfte entstehen dabei durch die Magnetfelder 52, 53 und die daraus resultierende Anziehungskraft zwischen dem Rotor 3 sowie dem Statorabschnitt 2.1 bzw. dem Rotor 3 sowie dem Statorabschnitt 2.3. Bei gleichmäßiger bzw. betragsgleicher Ausbildung beider Axialkräfte auf den Rotor 3 kann eine resultierende Axialkraft auf den Rotor 3 eliminiert werden. Dies ist vorteilhaft für die Dichtwirkung, die sich zwischen Dichtelementen 11 bzw. 12 und dem Rotor 3 einstellt, da so vermieden wird, dass der Rotor 3 axial zu der Seite gezogen wird, auf der die höhere Axialkraft wirkt. Dies hätte zur Folge, dass an der Kontaktstelle zwischen dem Dichtelement 11 bzw. 12, zu dessen Seite der Rotor 3 gezogen wird, eine höhere Anpresskraft zwischen dem Rotor 3 und dem jeweiligen Dichtelement 11 bzw. 12 wirkt. Dies würde die Belastung des jeweiligen Dichtelements 11 bzw. 12 erhöhen, was zu einem Verschleiß dieses Dichtelements 11 bzw. 12 führen würde. Zudem würde der Kontakt zwischen dem jeweils anderen Dichtelement 11 bzw. 12, d.h. dem Dichtelements 11, 12, das auf der Seite des Rotors 3 liegt, von der der Rotor 3 weggezogen wird, entlastet werden. Dies kann dazu führen, dass die Dichtwirkung an diese Dichtelement 11, 12 reduziert wird oder sogar gänzlich aufgehoben wird, wodurch magnetorheologisches Pulver aus dem Innenraum 8 in Richtung der Achse 18 bzw. der Welle 6 austreten kann.

Die hier gezeigte Bremse 1 kann insbesondere zur Durchführung des oben beschriebenen Verfahrens bzw. der oben beschriebenen Ansteuerlogik ausgebildet sein.

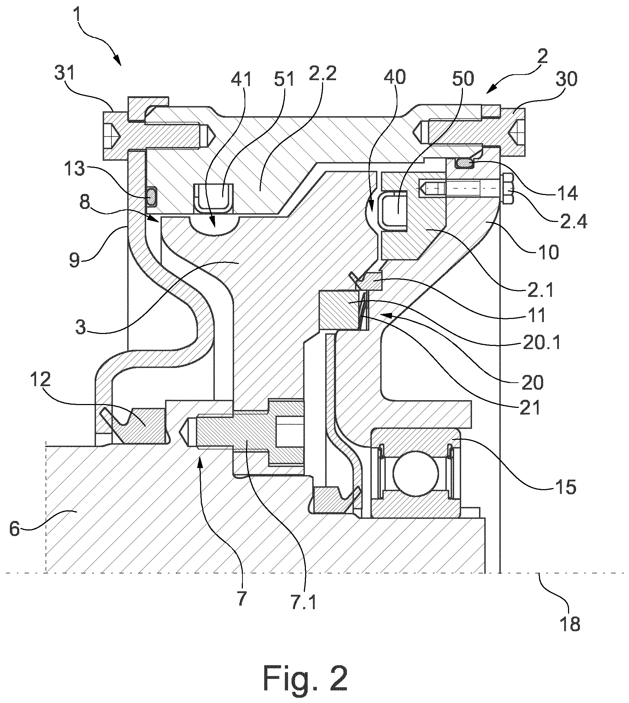

Fig. 2 zeigt eine schematische Schnittdarstellung einer magnetorheologischen Bremse gemäß einer Ausführungsform der Erfindung.

Es ist eine magnetorheologischen Bremse 1 gezeigt. Die Bremse 1 weist einen Rotor 3 auf, der auf einer Welle 6 drehfest vorgesehen ist. Die Welle 6 erstreckt sich hierbei in der Zeichnung von links nach rechts, wobei sie um die Achse 18, die horizontal verläuft, drehbar vorgesehen ist.

Die hier gezeigte Bremse 1 kann insbesondere zur Durchführung des oben beschriebenen Verfahrens bzw. der oben beschriebenen Ansteuerlogik ausgebildet sein.

Zur Anbindung von Elementen, wie haptischen Bedienelementen oder drehbaren Wellen, kann ein Abschnitt der Welle 6 als mechanische Schnittstelle der Bremse 1 ausgebildet sein.

Angaben zur Positionierung oder Richtung einiger Elemente der Bremse 1, werden in der Zeichnung in Bezug auf die Achse 18 gemacht. D. h., dass in der Zeichnung eine Radialrichtung eine vertikal nach oben verlaufende Richtung ist, und dass eine Axialrichtung eine Richtung parallel zur Achse 18 ist, die in der Zeichnung von links nach rechts verläuft.

Die Welle 6 ist dabei mittels eines Lagers 15 in dem Gehäuse der Bremse 1 gelagert. Das Gehäuse weist insbesondere die Gehäuseabschnitte 9 und 10 auf, die axial einen Innenraum 8 der Bremse begrenzen, wobei der Innenraum 8 außenradial durch den Stator 2, genauer gesagt einen Statorabschnitt 2.2 begrenzt ist. Der Stator 2 ist gegenüber dem Rotor 3 feststehend ausgebildet, sodass sich der Rotor 3, bei Drehung der Welle 6 mit der er über den Befestigungsabschnitte 7 der Welle 6 mittels eines Befestigungselements 7.1, wie einer Schraube, befestigt ist, gegenüber dem Stator 2 dreht.

Der Innenraum 8 ist durch die Dichtelemente 11 und 12 in Radialrichtung nach innen in Bezug auf die Achse 18 abgedichtet. Das Dichtelement 11 ist dabei in dem Gehäuseabschnitt 10 vorgesehen, wobei es gleitend mit einer Oberfläche des Rotors 3 in Kontakt steht. Das Dichtelement 12 ist dabei auf der Welle 6 vorgesehen, wobei es gleitend mit einer Oberfläche des Gehäuseabschnitts 9 in Kontakt steht.

Zwischen dem Gehäuseabschnitt 9 und dem Statorabschnitt 2.2 ist zur Abdichtung des Innenraums 8 ein Dichtelement 13 vorgesehen. Zwischen dem Gehäuseabschnitt 10 und dem Statorabschnitt 2.2 ist zur Abdichtung des Innenraums 8 ein Dichtelement 14 vorgesehen.

Innerhalb des Innenraums 8 weist die Bremse 1 einen ersten Spalt 40 sowie einen zweiten Spalt 41 auf. Der erste Spalt 40 verläuft dabei im Wesentlichen in Radialrichtung. Axial ist er nach links durch eine entsprechende Oberfläche des Rotors 3 begrenzt, während er axial nach rechts durch eine entsprechende Oberfläche eines Statorabschnitts 2.1 begrenzt ist. Der Statorabschnitt 2.1 ist in der gezeigten Ausführungsform mittels eines Befestigungselements 2.4, wie einer Schraube, an dem Gehäuseabschnitt 10 befestigt. Der zweite Spalt 41 erstreckt sich im Wesentlichen axial und ist innenradial durch eine entsprechende Oberfläche des Rotors 3 begrenzt, während er außenradial durch eine entsprechende Oberfläche des Statorabschnitts 2.2 begrenzt ist.

Die Bremse 1 weist ferner einen ersten Magnetfelderzeuger 50 sowie einen zweiten Magnetfelderzeuger 51 auf. Beide Magnetfelderzeuger 50, 51 können als elektrische Spulen ausgebildet sein, die entsprechend ihren Windungen sowie ihrer Bestromung ein erstes Magnetfeld bzw. ein zweites Magnetfeld erzeugen können. Das erste Magnetfeld, das vom ersten Magnetfelderzeuger 50 erzeugt wird, durchsetzt dabei den ersten Spalt 40. Das zweite Magnetfeld, das vom zweiten Magnetfelderzeuger 51 erzeugt wird, durchsetzt dabei den zweiten Spalt 41. Im Innenraum 8, insbesondere in den Spalten 40, 41 befindet sich ein magnetorheologisches Pulver, das in Reaktion auf das erste Magnetfeld bzw. auf das zweite Magnetfeld zwischen seinen Pulverpartikeln Ketten ausbildet, sodass sich die Scher- und Reibeigenschaften des Pulvers innerhalb der Spalte 40, 41 ändern. Ketten aus Pulverpartikeln verlaufen dann im ersten Spalt 40 im Wesentlichen in Axialrichtung, während sie im zweiten Spalt 41 im Wesentlichen in Radialrichtung verlaufen. Auf diese Weise entstehen in den Spalten 40, 41 entsprechende Reibstellen, sodass sich eine erste Bremswirkung, erzeugt im ersten Spalt 40, sowie eine zweite Bremswirkung, erzeugt im zweiten Spalt 41, einstellen, die jeweils auf den Rotor 3 wirken und als Gesamtbremswirkung kombiniert werden können.

Zu erkennen ist ferner, dass der Stator 2 mehrere Statorabschnitte 2.1, 2.2 aufweist. Die Statorabschnitte 2.1, 2.2 sowie die Gehäuseabschnitte 9 und 10 sind mittels der Befestigungselemente 30, 31 sowie des Befestigungselements 2.4 miteinander verbunden, bzw. sie werden bei der Montage entsprechend zusammengesetzt, was den Zusammenbau der Bremse 1 erleichtert. Die Befestigungselemente 2.4, 30, 31 können Schrauben sein.

Zur Dämpfung der Stick-Slip-Effekte und Reibschwingungen und somit zur Verbesserung des NVH-Verhaltens, weist die Bremse 1 eine Dämpfungseinrichtung 20 auf. Diese ist als optional zu verstehen und kann bei anderen Ausführungsformen der Bremse 1 entfallen. Die Dämpfungseinrichtung 20 weist ein Dämpfungselement 20.1 auf, das im Gehäuseabschnitt 10 vorgesehen ist. Das Dämpfungselement 20.1 kontaktiert in axialer Richtung die in der Zeichnung rechte Oberfläche des Rotors 3, wobei das Dämpfungselement 20.1 gegenüber dem Rotor 3 feststehend vorgesehen ist. Auf diese Weise wird in der Kontaktstelle zwischen der Rotoroberfläche und der axial auf den Rotor 3 weisenden Oberfläche des Dämpfungselements 20.1 eine gleitende Flächenpaarung gebildet, die dazu ausgebildet ist, eine Dämpfungswirkung auf den Rotor 3 auszuüben. In der gleitenden Flächenpaarung fungiert dabei die Oberfläche des Rotors 3, mit der das Dämpfungselement 20.1 in Kontakt steht als Gegenfläche.

Die Dämpfungswirkung stellt sich dabei durch eine Verformung des Dämpfungselement 20.1 in Drehrichtung des Rotors 3 um die Achse 18 ein. Das Dämpfungselement 20.1 wird dabei verdreht und absorbiert dabei Schwingungsenergie, die durch die Materialdämpfung des Dämpfungselements 20.1 in Wärme umgewandelt wird. Zudem kann eine sich in der gleitenden Flächenpaarung einstellende Reibkraft zur Dämpfung weiter beitragen.

Das Dämpfungselement kann hier aus einem Elastomer bestehen und einen Verlustfaktor von 0,1 aufweisen und/oder einen E-Modul von 150 - 1500 N/mm$^2$.

Wie in der Zeichnung zu sehen ist, ist die Dämpfungseinrichtung 20 außerhalb des Innenraums 8 angeordnet. Genauer: die Dämpfungseinrichtung 20 ist hier innenradial in Bezug auf den Innenraum 8 angeordnet, d.h., die Dämpfungseinrichtung 20 ist hier unterhalb des Dichtelements 11 angeordnet. In der Darstellung wird deutlich, dass die Dämpfungseinrichtung 20, die hier ein als Ring ausgebildetes Dämpfungselement 20.1 aufweist, so positioniert werden kann, dass die Bremse 1 axial nicht breiter baut als eine Bremse 1 ohne eine solche Dämpfungseinrichtung 20. Dies wird klar, wenn man die maximale axiale Erstreckung des Rotors 3 betrachtet. Das Dämpfungselement 20.1 kann hier noch radial unterhalb des sich axial erstreckenden Bereichs des Rotors 3, der letztlich den Spalt 40 axial sowie den Spalt 41 innenradial begrenzt, angeordnet werden. Somit ist das Dämpfungselement 20.1 radial an einer Einschnürung oder Engstelle des Rotors 3 platziert, was zu keiner axialen Verbreiterung der Bremse 1 führt, denn diese wird im gezeigten Beispiel maßgeblich durch die axiale Erstreckung des Rotors 3 bestimmt.

Eine Einstellung der Anpresskraft, mit der das Dämpfungselement 20.1 gegen den Rotor 3 gedrückt wird, kann im Übrigen durch den Aufbau der Bremse 1 bestimmt werden. Insbesondere kann durch Zusammenwirken von Gehäuseabschnitt 10 und Dämpfungselement 20.1, bei Herstellung der Verbindung zwischen den Statorabschnitten 2.1, 2.2 mittels des Befestigungselements 30, eine axiale Position oder Vorspannung des Dämpfungselements 20.1 und damit eine Anpresskraft auf den Rotor 3 eingestellt werden. So kann die Dämpfungswirkung entsprechend beeinflusst werden.

Die Platzierung der Dämpfungseinrichtung 20 außerhalb des Innenraums 8 hat zudem den Vorteil, dass keine Pulverpartikel in die gleitende Flächenpaarung, d.h. zwischen Dämpfungselement 20.1 und Rotor 3, gelangen können. So wird verhindert, dass sich die Reibverhältnisse in der gleitenden Flächenpaarung verändern, so dass die Dämpfungswirkung nachlässt. Die Pulverpartikel könnten ansonsten wie kleine Wälzkörper oder auch wie Abrasivkörper in der gleitenden Flächenpaarung wirken und die Schwingungsdämpfung oder Lebensdauer herabsetzen. Das Dichtelement 11 schirmt hierbei die Dämpfungseinrichtung 20 ab.

Optional kann, wie hier gezeigt ist, ein Vorspannungselement 21 vorgesehen sein, das axial auf das Dämpfungselement 20.1 wirkt und dieses axial gegen den Rotor 3 und damit gegen die Gegenfläche der gleitenden Flächenpaarung drückt. Auf diese Weise kann ein permanenter Kontakt in der gleitenden Flächenpaarung hergestellt werden, indem das Vorspannungselement 21 Toleranzen und Spiel sowie einen Verschleiß des Dämpfungselements 20.1, d.h. einen Materialverlust aufgrund der Reibung in der gleitenden Flächenpaarung, überwindet bzw. nachstellt. Somit ist die Dämpfungswirkung auf den Rotor 3 über Lebensdauer der Bremse 1 bei entsprechender Auslegung des Vorspannungselements 21 sichergestellt.

Durch die radiale Erstreckung des ersten Spalts 40 ergibt sich eine axiale Anziehungskraft zwischen dem Rotor 3 und dem Stator 2, genauer gesagt, zwischen dem Statorabschnitt 2.1 und der entsprechend gegenüberliegenden Rotorfläche, die den ersten Spalt 40 axial begrenzt. Die Bremse 1 kann dabei so ausgelegt sein, dass die axiale Anziehungskraft genutzt wird, um die Dämpfung der Dämpfungseinrichtung 20 einzustellen. Dafür kann die Bremse 1 so ausgebildet sein, dass die axiale Anziehungskraft zumindest teilweise, vorzugsweise vollständig, in der gleitenden Flächenpaarung zwischen Rotor 3 und Dämpfungselement 20.1 abgestützt wird. Auf diese Weise wird die Antriebskraft in der gleitenden Flächenpaarung entsprechend erhöht, was zu einer Erhöhung der Dämpfungswirkung führt. Gleichzeitig kann sich dadurch auch eine Bremswirkung auf den Rotor 3 einstellen, sodass die erste Bremswirkung, die durch den ersten Magnetfelderzeuger 50 in dem ersten Spalt 40 erzeugt wird, durch diese Bremswirkung ergänzt wird.

Ein Erzeugen einer zweiten Bremswirkung in dem zweiten Spalt 41, in dem der zweite Magnetfelderzeuger 51 diesen mit einem zweiten Magnetfeld durchsetzt, hat keine Auswirkung auf die Wirkung der Dämpfungseinrichtung 20. Hier wirkt die Anziehungskraft zwischen Rotor 3 und Statorabschnitt 2.2 in radialer Richtung. Der Rotor 3 wird dadurch nicht axial an die Dämpfungseinrichtung 20 herangezogen, wodurch keine weitere Kraft in die gleitende Flächenpaarung zwischen Rotor 3 und Dämpfungselement 20.1 eingebracht wird. Somit erlaubt die Ansteuerung des zweiten Magnetfelderzeugers 51 eine Erzeugung einer Bremswirkung, die im Wesentlichen durch die Reibstelle in dem ersten Spalt 41 erzeugt wird.

Der Spalt 41 sowie der zweite Magnetfelderzeuger 51 der in Figur 2 gezeigte Bremse 1 sind als optional zu verstehen. Eine Bremse 1, die diese Elemente nicht aufweist, ansonsten aber der in Figur 2 gezeigte Bremse 1 entspricht, kann ebenso eine Bremswirkung in Form der ersten Bremswirkung, die in dem Spalt 40 erzeugt wird, auf den Rotor 3 ausüben. Ist die vorstehend beschriebene Dämpfungseinrichtung 20 vorhanden, kann darüber hinaus die Dämpfungswirkung entsprechend der axialen Anpresskraft eingestellt werden, die sich aus dem Magnetfeld des ersten Magnetfelderzeugers 50 ergibt, das den ersten Spalt 40 durchsetzt.

Die Ausführungsformen der in den Figuren 1 und 2 gezeigten Bremsen, die einen ersten Magnetfelderzeuger 50 sowie eine zweiten Magnetfelderzeuger 51 aufweisen, erlauben unterschiedliche Betriebsstrategien der Bremsen 1. Daher werden nachfolgend unter Bezugnahme auf die Figuren 1 und 2 unterschiedliche Betriebsstrategien erläutert.

Der zweite Magnetfelderzeuger 51 kann sowohl bei der in Figur 1 als auch bei der in Figur 2 gezeigten Ausführungsform dazu genutzt werden, die erste Bremswirkung, d. h. die Bremswirkung, die durch den ersten Magnetfelderzeuger 50 erzeugt wird, zu ergänzen. D.h., dass die Bremswirkungen des ersten sowie des zweiten Magnetfelderzeugers zu einer Gesamtbremswirkung kombiniert werden, die einer Sollbremswirkung entsprechen soll, die insbesondere höher sein kann als die maximal möglichen einzelnen Bremswirkungen, die durch den ersten Magnetfelderzeuger 50 sowie durch den zweiten Magnetfelderzeuger 51 hervorgerufen werden können. Die entsprechende Ansteuerung des ersten Magnetfelderzeugers 50 sowie des zweiten Magnetfelderzeugers 51, die im Wesentlichen aus der Einstellung des jeweiligen Spulenstroms, insbesondere der Stromstärke und/oder der Stromflussrichtung, besteht, kann durch eine Steuereinrichtung (nicht gezeigt) der Bremse 1, wie ein Steuergerät realisiert werden.

Alternativ oder zusätzlich kann vorgesehen sein, dass der erste Magnetfelderzeuger 50 sowie der zweite Magnetfelderzeuger 51 zueinander redundant ausgebildet sind, d. h., dass bei Ausfall oder bei Fehlfunktion eines der beiden Magnetfelderzeuger 50, 51 eine Bremswirkung durch den anderen der beiden Magnetfelderzeuger 50, 51 in dem jeweiligen Spalt 40, 41, 42 und/oder in einem vierten Spalt hervorgerufen wird. Auf diese Weise ist eine Ausfallsicherheit der Bremse 1 sichergestellt. Dabei ist zu beachten, dass eine Maximalbremswirkung auf den Rotor 3, die bei Erzeugung einer jeweils maximalen Bremswirkung durch den ersten Magnetfelderzeuger 50 sowie durch den zweiten Magnetfelderzeuger 51 erzeugbar ist, nun nicht mehr erzeugbar ist, da in diesem Redundanzfall lediglich ein Magnetfelderzeuger 50, 51 angesteuert werden kann.

Alternativ oder zusätzlich kann vorgesehen sein, dass die beiden Magnetfelderzeuger 50, 51 unabhängig voneinander angesteuert werden, wodurch eine grundlegende Bremswirkung erzielt werden kann. Ein Einstellen einer Sollbremswirkung ist bei dieser Ansteuerweise nicht möglich, wenn beide Magnetfelderzeuger 50, 51 aktiv sind. Dafür kann hier auf eine aufwändige Regelung der Bremse 1 verzichtet werden.

Alternativ oder zusätzlich kann vorgesehen sein, dass einer der Magnetfelderzeuger 50, 51 so angesteuert wird, dass er eine grundlegende Bremswirkung auf den Rotor 3 erzeugt. Der andere Magnetfelderzeuger 50, 51 wird dann so angesteuert, dass sich eine Gesamtbremswirkung einstellt, die sich durch Kombination der ersten und zweiten Bremswirkung ergibt, sodass sich eine gewünschte Sollbremswirkung, auf den Rotor 3 einstellt. Insbesondere bei der in Figur 2 gezeigten Ausführungsform, die die Dämpfungseinrichtung 20 aufweist, kann eine derartige Steuerung realisiert sein. Dabei kann der erste Magnetfelderzeuger 50 entsprechend angesteuert werden, dass er die erste Bremswirkung als grundlegende Bremswirkung erzeugt. Dabei kann beispielsweise durch die Steuereinrichtung der Bremse 1 ein vorbestimmter Spulenstrom eingestellt werden, sodass sich neben der ersten Bremswirkung, die in dem ersten Spalt 40 erzeugt wird, eine vorbestimmte Anpresskraft in der gleitenden Flächenpaarung der Dämpfungseinrichtung 20 einstellt. Der vorbestimmte Spulenstrom und/oder die vorbestimmte Anpresskraft um die gewünschte erste Bremswirkung sowie die gewünschte Dämpfungswirkung auf den Rotor 3 zu erzeugen, können beispielsweise in einem Speicher, insbesondere in der Steuereinrichtung, abgelegt sein und einem Anwendungsfall, der beispielsweise über die einzustellende Sollbremswirkung charakterisiert ist, zuordenbar sein und somit abrufbar sein. Der zweite Magnetfelderzeuger 51 kann dann geregelt angesteuert werden, um die Gesamtbremswirkung auf den Rotor 3, die sich aus der ersten und zweiten Bremswirkung sowie einer gegebenenfalls vorhandenen Bremswirkung der gleitenden Flächenpaarung ergibt, entsprechend einer Sollbremswirkung einzustellen.

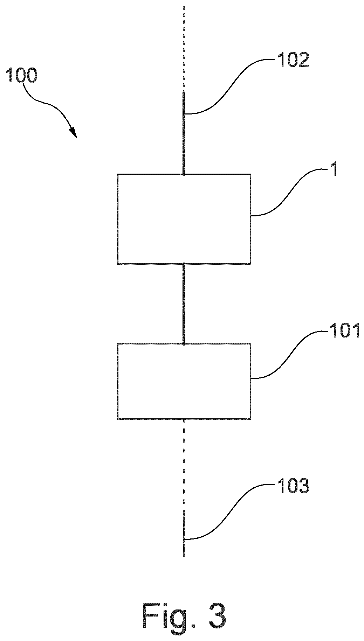

Fig. 3 zeigt eine schematische Darstellung eines Force-Feedback-Aktuators, gemäß einem weiteren Aspekt der Erfindung.

Der dargestellte Force-Feedback-Aktuator 100 weist eine magnetorheologische Bremse 1 auf, die wie eine Bremse 1 aus den Figuren 1 oder 2 ausgeführt sein kann. Zudem weist der Force-Feedback-Aktuator 100 eine Antriebseinheit 101 auf. Die Antriebseinheit 101 kann als Elektromotor ausgeführt sein oder einen Elektromotor aufweisen.

Der Force-Feedback-Aktuator 100 weist eine mechanische Schnittstelle 102 auf, die sich in der Zeichnung vertikal erstreckt und als Welle ausgebildet ist. Die Welle ist zur senkrecht verlaufenden Achse 103 drehbar vorgesehen und zur Achse 103 koaxial orientiert. Die mechanische Schnittstelle 102 ist dazu ausgebildet, mit einem Eingabeelement verbunden zu werden. Dies kann bspw. ein Joystick, ein Drehknopf oder ein Lenkelement, wie ein Lenkrad sein. Das Eingabeelement kann bspw. am oberen freien Ende der mechanischen Schnittstelle 102 mit der mechanischen Schnittstelle 102 verbunden werden.

Bremse 1 und Antriebseinheit 101 sind mit der mechanischen Schnittstelle 102 verbunden. Bspw. kann vorgesehen sein, dass die mechanische Schnittstelle 102 mit der als Welle 6 ausgebildeten mechanischen Schnittstellen einer der Bremsen 1 aus den Figuren 1 oder 2 verbunden ist, so dass der Rotor 3 ein von der Bremse 1 erzeugtes Bremsmoment auf die mechanische Schnittstelle 102 aufbringen kann. In diesem Fall stellt die mechanische Schnittstelle 102 eine Verbindung zur Welle 6 oder eine Verlängerung der Welle 6 aus den Figuren 1 oder 2 dar, wobei die mechanische Schnittstelle 102 bspw. mit der Welle 6 verbunden oder mit ihr identisch ist. Die Antriebseinheit 101 ist dazu ausgebildet, ein Antriebsmoment auf die mechanische Schnittstelle 102 aufzubringen. Dabei kann die Antriebseinheit 101 vorzugsweise dazu ausgebildet sein, das Antriebsmoment in beide Drehrichtungen der mechanischen Schnittstelle 102 auf die mechanische Schnittstelle 102 aufzubringen.

Durch entsprechende Ansteuerung der Bremse 1 und der Antriebseinheit 101, bspw. durch eine Steuereinheit (nicht gezeigt) des Force-Feedback-Aktuators 100, kann eine haptische Rückmeldung erzeugt werden, die für einen Anwender an der mechanischen Schnittstelle 102 bzw. an einem daran drehmomentübertragend gekoppelten Eingabeelement spürbar ist.

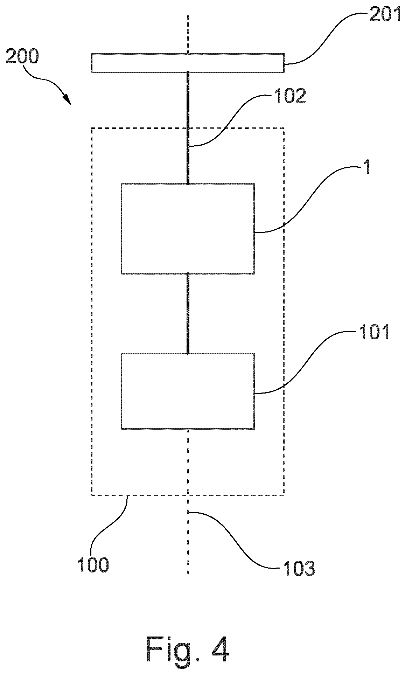

Fig. 4 zeigt eine schematische Darstellung einer Lenkeinrichtung für ein Fahrzeug, gemäß einem weiteren Aspekt der Erfindung.

Als Bestandteil der Lenkeinrichtung 200 ist hier der vorstehend in Fig. 3 gezeigte Force-Feedback-Aktuator 100 gezeigt, der hier von einem gestrichelten Kasten umrahmt ist. Für dessen Beschreibung wird auf die Beschreibung zu Fig. 3 verwiesen.

Mit der mechanischen Schnittstelle 102 ist hier drehmomentübertragend ein Eingabeelement 201 gekoppelt, das hier als Lenkelement, bspw. als Lenkrad, ausgebildet ist. Ein Anwender kann so direkt über das Lenkelement eine haptische Rückmeldung erhalten, die in Form eines Bremsmoments von der Bremse 1 und/oder in Form eines Antriebsmoments von der Antriebseinheit 101 des Force-Feedback-Aktuators 100 auf die mechanische Schnittstelle 102 aufgebracht wird. Die geometrische Anordnung der Antriebseinheit 101 und der Bremse 1 in Bezug auf die Schnittstelle 102 ist wahlfrei, da sich auf der mechanischen Schnittstelle 102 das Moment ohne Bevorzugung addiert. Die mechanische Schnittstelle 102 kann also auch näher an der Antriebseinheit 101 angeordnet sein (die Antriebseinheit 101 und die Bremse 1 können vertauscht werden).

Die gezeigte Lenkeinrichtung 200 kann als Steer-by-Wire-Lenkeinrichtung ausgebildet sein. Bei dieser Ausprägung der Lenkeinrichtung 200 ist die mechanische Schnittstelle 102 nicht mit den gelenkten Rädern eines Fahrzeugs verbunden oder zu dieser Verbindung ausgebildet. Eine haptische Rückmeldung über den aktuellen Fahrzustand der gelenkten Räder, bspw. durch ein Rückstellmoment am Eingabeelement 201, kann hier aufgrund der fehlenden mechanischen Verbindung der Räder mit dem Lenkelement nicht erfolgen. Dies kann dann stattdessen durch den verbauten Force-Feedback-Aktuator 100 erfolgen, indem die Antriebseinheit 101 und/oder die Bremse 1, bspw. durch eine Steuereinheit (nicht gezeigt) des Force-Feedback-Aktuators 100 oder der Lenkeinrichtung 200, entsprechend angesteuert werden. Auf diese Weise wird durch Verzicht der mechanischen Verbindung zu den Rädern ein Bauraumvorteil der Lenkeinrichtung 200 bzw. des Fahrzeugs realisiert.

Dennoch ist auch denkbar, dass die Lenkeinrichtung 200 zur mechanischen Kopplung mit den gelenkten Rädern eines Fahrzeugs ausgebildet ist. In diesem Fall ist es möglich, die haptische Rückmeldung, die über die mechanische Kopplung mit den gelenkten Rädern fühlbar ist, durch das Antriebsmoment der Antriebseinheit 101 und/oder durch das Bremsmoment der Bremse 1 zu ergänzen, indem die Antriebseinheit 101 und/oder die Bremse 1, bspw. durch eine Steuereinheit (nicht gezeigt) des Force-Feedback-Aktuators 100 oder der Lenkeinrichtung 200, entsprechend angesteuert werden, um so ein gewünschtes Lenkgefühl einstellen zu können.

Die hier im Zusammenhang mit den Figuren beschriebenen Ausführungsformen der Erfindung und die oben im allgemeinen Teil der Beschreibung beschriebenen Ausführungsformen sind beliebig miteinander kombinierbar.

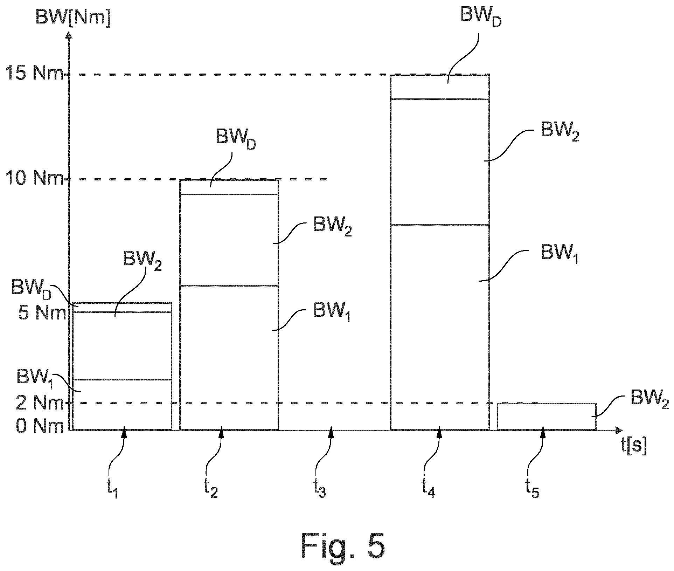

Fig. 5 zeigt eine schematische Darstellung eines Zeitverlaufs einer Ansteuerung der Bremse aus Fig. 2.

Die Bremse 1, die hier betrachtet wird, weist das optionale Vorspannungselement 21 nicht auf. Stattdessen steht die Dämpfungseinrichtung 20 nicht unter Vorspannung, so dass auch keine Bremswirkung oder Dämpfungswirkung auf den Rotor 3 in Folge einer Vorspannung wirkt.

Auf der horizontalen Achse ist die Zeit t aufgetragen. Auf der vertikalen Achse ist die Bremswirkung BW auf den Rotor aufgetragen. Diese ist hier als Bremsmoment in [Nm] aufgeführt, kann aber auch durch andere Größen, bspw. durch elektrische Ströme der Magnetfelderzeuger 50, 51 ausgedrückt werden.

Nacheinander sind fünf Zustände der Bremse 1 zu fünf aufeinanderfolgenden Zeitpunkten $t_1$-$t_5$ gezeigt.

Zum Zeitpunkt $t_1$ wird eine Gesamtbremswirkung von 5 Nm gestellt, was der Sollbremswirkung zu Zeitpunkt $t_1$ entspricht. Dabei werden sowohl der erste Magnetfelderzeuger 50 als auch der zweite Magnetfelderzeuger 51 bestromt, so dass sich eine erste Bremswirkung $BW_1$ durch den erste Magnetfelderzeuger 50 und eine zweite Bremswirkung $BW_2$ durch den zweiten Magnetfelderzeuger 51 einstellt. Die Bremswirkung $BW_1$ fällt dabei im Vergleich zu der Bremswirkung $BW_2$ geringer aus und ist lediglich so eingestellt, dass die Dämpfungseinrichtung 20 so mittels der entstehenden Axialkraft angepresst wird, dass die Reibschwingung bei 5 Nm eliminiert wird. Zu erkennen ist, dass ein weiterer Anteil der Gesamtbremswirkung nicht von dem ersten Magnetfelderzeuger 50 oder dem zweiten Magnetfelderzeuger 51 gestellt wird. Stattdessen ist hier noch eine Bremswirkung $BW_D$ aus Dämpfungseinrichtung 20 vorhanden, die auf der Reibung der gleitenden Flächenpaarung der Dämpfungseinrichtung 20 beruht. Dieser Anteil kann hier bspw. 5 % - 10 % der Gesamtbremswirkung betragen, wobei die sich einstellende Reibung in der Dämpfungseinrichtung bei der Ansteuerung des ersten Magnetfelderzeugers 50 als auch des zweiten Magnetfelderzeugers 51 berücksichtigt wird. Es liegt somit eine kombinierte Bremswirkung von erstem Magnetfelderzeugers 50, zweitem Magnetfelderzeugers 51 und Dämpfungseinrichtung 20 vor.

Zu Zeitpunkt $t_2$ stellt die Bremse 1 eine Gesamtbremswirkung von 10 Nm und zu Zeitpunkt $t_4$ eine Gesamtbremswirkung von 15 Nm. Zu beiden Zeitpunkten wird der erste Magnetfelderzeuger 50 entsprechend hoch bestromt, so dass die Dämpfungseinrichtung 20 ausreichende Axialkraft erfährt, damit die Reibschwingung die bei einer derart hohen Gesamtbremswirkung auftreten kann, eliminiert wird. Der Anteil der ersten Bremswirkung $BW_1$ ist hier also entsprechend höher. Er liegt bei über 50 % der Gesamtbremswirkung. Zu erkennen ist weiterhin, dass aufgrund der damit verbundenen stärkeren Axialkraft, auch eine stärkere Anpresskraft auf die Dämpfungseinrichtung 20 wirkt. Somit steigt auch der Betrag der durch Reibung in der Dämpfungseinrichtung 20 erzeugten Bremswirkung $BW_D$.

Zum Zeitpunkt t3 wird keine Gesamtbremswirkung erzeugt. Da die Dämpfungseinrichtung 20 auch hier nicht mit einem Vorspannungselement versehen ist, liegt auch keine reibungsbasierte Bremswirkung der Dämpfungseinrichtung 20 vor. Die Gesamtbremswirkung kann so tatsächlich auf Null reduziert werden.

Zum Zeitpunkt $t_5$ soll lediglich eine geringe Gesamtbremswirkung von 2 Nm erzeugt werden. In diesem Fall wird die Gesamtbremswirkung ausschließlich durch den zweiten Magnetfelderzeuger 51 erzeugt, so dass die Gesamtbremswirkung gleich der zweiten Bremswirkung $BW_2$ ist. Der erste Magnetfelderzeuger 50 wird hier nicht weiter angesteuert, da bei solchen vergleichsweise geringen Gesamtbremswirkungen bei der gezeigten Bremse 1 keine oder nur vernachlässigbare Reibschwingungen auftreten.

**Bezugszeichenliste**

| | |
|---|---|
| 1 | magnetorheologische Bremse |
| 2 | Stator |
| 2.1 | Statorabschnitt |
| 2.2 | Statorabschnitt |
| 2.3 | Statorabschnitt |
| 2.4 | Befestigungselement |
| 3 | Rotor |
| 6 | Welle |
| 7 | Befestigungsabschnitt |
| 7.1 | Befestigungselement |
| 8 | Innenraum |
| 9 | Gehäuseabschnitt |
| 10 | Gehäuseabschnitt |
| 11 | Dichtelement |
| 12 | Dichtelement |
| 13 | Dichtelement |
| 14 | Dichtelement |
| 15 | Lager |
| 18 | Achse |
| 20 | Dämpfungseinrichtung |
| 20.1 | Dämpfungselement |
| 21 | Vorspannungselement |
| 30 | Befestigungselement |
| 31 | Befestigungselement |
| 40 | erster Spalt |
| 41 | zweiter Spalt |
| 42 | dritter Spalt |
| 50 | erster Magnetfelderzeuger |
| 51 | zweiter Magnetfelderzeuger |
| 52 | erstes Magnetfeld |
| 53 | zweites Magnetfeld |
| 100 | Force-Feedback-Aktuator |
| 101 | Antriebseinheit |
| 102 | mechanische Schnittstelle |
| 103 | Achse |
| 200 | Lenkeinrichtung |
| 201 | Eingabeelement |
| BW | Bremswirkung |
| $BW_1$ | erste Bremswirkung |
| $BW_2$ | zweite Bremswirkung |
| $BW_D$ | Bremswirkung aus Dämpfungseinrichtung |
| $M_{Soll}$ | Sollbremsmoment |
| t | Zeit |
| $t_1$-$t_S$ | Zeitpunkte |
| $V_{Ist}$ | Relativgeschwindigkeit |

**Patentansprüche**

1. Magnetorheologische Bremse (1), aufweisend

   einen Rotor (3), der um eine Achse (18) drehbar vorgesehen ist,
   einen Stator (2), der gegenüber dem Rotor (3) feststehend vorgesehen ist,
   wobei zwischen dem Rotor (3) und dem Stator (2) mindestens ein erster Spalt (40) vorgesehen ist, der durch den Rotor (3) und den Stator (2) in Axialrichtung bezogen auf die Achse (18) begrenzt ist und in dem ein magnetorheologisches Pulver vorgesehen ist,
   wobei die Bremse (1) einen ersten Magnetfelderzeuger (50) aufweist, der dazu ausgebildet ist, zumindest den ersten Spalt (40) mit einem Magnetfeld zu durchsetzen, um eine erste Bremswirkung ($BW_1$) auf den Rotor (3) zu erzeugen, wobei die Bremse (1) weiter
   einen zweiten Magnetfelderzeuger (51) aufweist,
   wobei der zweite Magnetfelderzeuger (51) dazu ausgebildet ist, eine zweite Bremswirkung ($BW_2$) auf den Rotor (3) zu erzeugen, wobei die Bremse (1) weiter
   eine Dämpfungseinrichtung (20) mit einer gleitenden Flächenpaarung aufweist, wobei die Dämpfungseinrichtung (20) ein Dämpfungselement (20.1) aufweist, das eine Fläche der gleitenden Flächenpaarung bildet und die Dämpfungseinrichtung (20) dazu ausgebildet ist, eine auf den Rotor (3) wirkende schwingende Gesamtbremswirkung vor Übertragung auf eine mechanische Schnittstelle der Bremse (1), mit der der Rotor (3) verbunden ist, zu dämpfen,
   wobei die Bremse (1) dazu ausgebildet ist, die gleitende Flächenpaarung mit einer Axialkraft zu beaufschlagen, die durch den ersten Magnetfelderzeuger (50) erzeugt wird.

2. Bremse (1) nach Anspruch 1,

   wobei die Bremse (1) dazu ausgebildet ist, den zweiten Magnetfelderzeuger (51) so anzusteuern, dass die zweite Bremswirkung ($BW_2$) zur Ergänzung oder Ersetzung der ersten Bremswirkung ($BW_1$) dient, um eine Sollbremswirkung zu realisieren, oder
   wobei die Bremse (1) dazu ausgebildet ist, den zweiten Magnetfelderzeuger (51) unabhängig von der Ansteuerung des ersten Magnetfelderzeugers (50) anzusteuern.

3. Bremse (1) nach einem der vorstehenden Ansprüche,
   wobei die Bremse (1) dazu ausgebildet ist, den ersten Magnetfelderzeuger (50) so anzusteuern, dass die gleitende Flächenpaarung der Dämpfungseinrichtung (20) auf Basis eines Betriebszustands der Bremse (1) mit der Axialkraft beaufschlagt wird.

4. Bremse (1) nach Anspruch 3,
   wobei der Betriebszustand der Bremse (1) eine zu erzeugende Sollbremswirkung und/oder eine aktuelle Relativgeschwindigkeit zwischen Rotor (3) und Stator (2) und/oder die erste Bremswirkung ($BW_1$) und/oder die zweite Bremswirkung ($BW_2$) aufweist.

5. Bremse (1) nach Anspruch einem der vorstehenden Ansprüche,
   wobei zwischen dem Rotor (3) und dem Stator (2) mindestens ein zweiter Spalt (41) vorgesehen ist, der durch den Rotor (3) und den Stator (2) in Radialrichtung bezogen auf die Achse (18) begrenzt ist und in dem ein magnetorheologisches Pulver vorgesehen ist.

6. Verfahren zur Steuerung einer Bremse (1) nach einem der Ansprüche 1 bis 5, aufweisend die Verfahrensschritte:

   - Ansteuern des ersten Magnetfelderzeugers (50) zur Erzeugung einer Axialkraft auf die gleitende Flächenpaarung der Dämpfungseinrichtung (20) und zur Erzeugung einer ersten Bremswirkung ($BW_1$) auf den Rotor (3); und
   - Ansteuern des zweiten Magnetfelderzeugers (51) zur Erzeugung einer zweiten Bremswirkung ($BW_2$) auf den Rotor (3).

7. Verfahren nach Anspruch 6,
   wobei das Ansteuern des ersten Magnetfelderzeugers (50) und das Ansteuern des zweiten Magnetfelderzeugers (51) abhängig von einem Betriebszustand der Bremse (1) erfolgt.

**8.** Verfahren nach Anspruch 6 oder 7,
wobei das Ansteuern des ersten Magnetfelderzeugers (50) so erfolgt, dass die gleitende Flächenpaarung der Dämpfungseinrichtung (20) auf Basis eines Betriebszustands der Bremse (1) mit der Axialkraft beaufschlagt wird.

**9.** Verfahren nach Anspruch 7 oder 8,
wobei der Betriebszustand der Bremse (1) eine zu erzeugende Sollbremswirkung und/oder eine aktuelle Relativgeschwindigkeit ($V_{Ist}$) zwischen Rotor (3) und Stator (2) und/oder die erste Bremswirkung ($BW_1$) und/oder die zweite Bremswirkung ($BW_2$) aufweist.

**10.** Verfahren nach einem der Ansprüche 6 bis 9,

wobei vorgesehen ist, dass der erste Magnetfelderzeuger (50) nicht angesteuert wird, wenn die zu erzeugende Sollbremswirkung unter einem Sollbremswirkungsgrenzwert liegt und die aktuelle Relativgeschwindigkeit ($V_{Ist}$) zwischen Rotor (3) und Stator (2) über einem Relativgeschwindigkeitsgrenzwert liegt, und/oder

wobei vorgesehen ist, dass der erste Magnetfelderzeuger (50) ergänzend oder ausschließlich angesteuert wird, wenn die zu erzeugende Sollbremswirkung über dem Sollbremswirkungsgrenzwert liegt und/oder die aktuelle Relativgeschwindigkeit ($V_{Ist}$) zwischen Rotor (3) und Stator (2) unter einem Relativgeschwindigkeitsgrenzwert liegt.

**11.** Force-Feedback-Aktuator (100), aufweisend:

eine Antriebseinheit (101),
eine magnetorheologische Bremse (1) nach einem der Ansprüche 1 bis 5, und
eine mechanische Schnittstelle (102).

**12.** Lenkeinrichtung (200) für ein Fahrzeug, aufweisend:

ein als Lenkelement ausgebildetes Eingabeelement (201),
einen Force-Feedback-Aktuator (100) nach Anspruch 9 oder eine magnetorheologische Bremse (1) nach einem der Ansprüche 1 bis 5,
wobei das Eingabeelement (201) drehfest mit der mechanischen Schnittstelle (102) des Force-Feedback-Aktuators (100) oder drehfest mit einer mechanischen Schnittstelle der Bremse (1) gekoppelt ist.

Fig. 1

Fig. 2

Fig. 3

Fig. 4

Fig. 5

Europäisches Patentamt
European Patent Office
Office européen des brevets

# EUROPÄISCHER RECHERCHENBERICHT

Nummer der Anmeldung

EP 25 17 8282

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CN 213 575 261 U (FUJIAN CHUANZHENG COMM COLLEGE) 29. Juni 2021 (2021-06-29) | 1-9 | INV. G05G5/03 |
| A | * Abbildung 1 * | 10-12 | B62D5/00 |
| | * Absätze [0001], [0009], [0012], [0015], [0018] * | | F16F9/53 F16D57/00 |
| | ----- | | |
| A | US 4 542 809 A (CROSSMAN RICHARD L [US]) 24. September 1985 (1985-09-24) * Abbildung 1 * | 1 | |
| | ----- | | |
| A | DE 10 2022 121666 A1 (INVENTUS ENG GMBH [AT]) 28. Dezember 2023 (2023-12-28) * Abbildungen 1, 2 * * Absatz [0001] * | 1-12 | |
| | ----- | | |

RECHERCHIERTE SACHGEBIETE (IPC)

G05G
B62D
F16D
F16F

Der vorliegende Recherchenbericht wurde für alle Patentansprüche erstellt

| Recherchenort | Abschlußdatum der Recherche | Prüfer |
|---|---|---|
| Den Haag | 24. Oktober 2025 | Rossatto, Cédric |

## ANHANG ZUM EUROPÄISCHEN RECHERCHENBERICHT
## ÜBER DIE EUROPÄISCHE PATENTANMELDUNG NR.

EP 25 17 8282

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-10-2025

| Im Recherchenbericht angeführtes Patentdokument | Datum der Veröffentlichung | Mitglied(er) der Patentfamilie | Datum der Veröffentlichung |
|---|---|---|---|
| CN 213575261 U | 29-06-2021 | KEINE | |
| US 4542809 A | 24-09-1985 | BR 8500425 A<br>EP 0153265 A1<br>JP S60184730 A<br>US 4542809 A | 03-12-1985<br>28-08-1985<br>20-09-1985<br>24-09-1985 |
| DE 102022121666 A1 | 28-12-2023 | KEINE | |

EPO FORM P0461

Für nähere Einzelheiten zu diesem Anhang : siehe Amtsblatt des Europäischen Patentamts, Nr.12/82